# EUROPEAN PATENT SPECIFICATION

(11) **EP 4 273 775 B1**
(45) Date of publication and mention of the grant of the patent: **12.11.2025**
(21) Application number: 23199081.3
(22) Date of filing: 17.12.2018
(51) Int. Cl.: H04L 12/28, G05B 23/02, G05B 19/042, G06F 11/07, G06Q 10/04, G06Q 10/0631, G06Q 10/0635, G06Q 10/20

(54) **METHOD AND APPARATUS FOR CONTROLLING APPLIANCE BASED ON FAILURE PREDICTION**
VERFAHREN UND VORRICHTUNG ZUR STEUERUNG EINES GERÄTS AUF BASIS EINER FEHLERVORHERSAGE
PROCÉDÉ ET APPAREIL POUR COMMANDER UN APPAREIL MÉNAGER SUR LA BASE D'UNE PRÉDICTION DE DÉFAILLANCE

(30) Priority: 22.12.2017 KR 20170178395
(43) Date of publication of application: 08.11.2023
(62) Divisional of application: 18890987.3
(73) Proprietor: Samsung Electronics Co., Ltd., Suwon-si, Gyeonggi-do 16677 (KR)
(72) Inventor: Seo, Sungmok, 16677 Suwon-si Gyeonggi-do (KR); Hwang, Taeho, 16677 Suwon-si, Gyeonggi-do (KR); Lee, Jaehun, 16677 Suwon-si, Gyeonggi-do (KR); Kim, Sehoon, 16677 Suwon-si Gyeonggi-do (KR); Lee, Yunsu, 16677 Suwon-si, Gyeonggi-do (KR); Kim, Jaehong, 16677 Suwon-si Gyeonggi-do (KR)
(74) Representative: Gulde & Partner

(56) References cited:
- EP-A2- 2 267 305
- US-A1- 2011 218 957
- US-A1- 2013 201 018

## Description

### [Technical Field]

The present disclosure relates generally to a method and apparatus for controlling an appliance based on failure prediction, and more particularly, to artificial intelligence (AI) systems that may mimic the human brain's capabilities of perception or determination by using machine learning algorithms and their applications.

### [Background Art]

The Internet is evolving from a human-centered connection network, where information is produced and consumed, to an Internet-of-things (IoT) network, where information is communicated and processed among distributed components. Internet of everything (IoE) technology is a combination of big data processing technology and IoT technology, such as through a connection with a cloud server.

Implementing the IoT requires technical elements, such as sensing technology, wired/wireless communication and network infrastructure, service interface, and security technologies. Recent ongoing research for thing-to-thing connection is related to techniques for sensor networking, machine-to-machine (M2M), or machine-type communication (MTC).

Within the IoT environment may be offered intelligent Internet technology services that collect and analyze the data generated by the interconnected things in order to create a new value of human life. The IoT may have various applications, such as a smart home, smart building, smart city, smart car or connected car, smart grid, health-care, smart appliance industry, or state-of-art medical services, through the conversion or integration of existing Internet technologies and various industries.

A home network system enables control of appliances by wiredly or wirelessly linking the appliances. Advanced home network systems offer various Internet-related services by connecting appliances to an external public data network, such as the Internet protocol (IP) network, directly or via home gateways or customer premises equipment (CPE). Advanced home network systems may also enable their users to directly or indirectly control and manage appliances while interworking with the users' terminals. Such a home network system may offer services desired by users by controlling the appliances according to the users' request.

In developing appliances used in home network systems, manufacturers place significant effort towards quality warranty and customer services. Current quality warranty systems predict a failure in an appliance before it occurs, enabling cost-effective operation and enhanced reliability. Manufacturers offer home visit services for automated failure diagnosis and repair, contributing to cost savings and more satisfaction.

Human intelligence-class AI systems are being utilized in various industry sectors, and learn on their own and become smarter, unlike existing rule-based smart systems. The more used, the more precisely AI systems may perceive and understand users' preferences. Thus, legacy rule-based smart systems are being gradually replaced with deep learning-based AI systems.

AI technology consists of machine learning (e.g., deep learning) and machine learning-based component technology.

Machine learning is an algorithm technique that may classify and learn the features of input data. Component technology is for mimicking the perception and decision capabilities of the human brain by using a machine learning algorithm, such as deep learning, and may be divided into several technical fields, such as linguistic understanding, visual understanding, inference/prediction, knowledge expression, and operation control.

The following are examples of AI applications. Linguistic understanding is for recognizing and applying/processing a human being's language or text, and encompasses natural language processing, machine translation, dialog system, answering inquiries, and speech recognition/synthesis. Visual understanding is for perceiving and processing things as human eyes do, and encompasses object recognition, object tracing, image search, human recognition, scene recognition, space understanding, and image enhancement. Inference prediction is for determining and logically inferring and predicting information, encompassing knowledge/probability-based inference, optimization prediction, preference-based planning, and recommendation. Knowledge expression is for automatically processing human experience information, covering knowledge buildup (data production/classification) and knowledge management (data utilization). Operation control is for controlling the motion of robots and driverless car driving, and encompasses movement control (navigation, collision, driving) and maneuvering control (behavior control).

With recent technological developments and diversified user demand, however, there is a need in the art for a method and apparatus to both efficiently provide a customer visit service for repairing failures of appliances and to maintain normal operations of the appliances by considering a user's use pattern and a schedule based on the predicted failures of the appliances.

EP 2 267 305 A2 describes a method and a system for controlling operation of a wind turbine in the event of a predicted failure with the aim to keep the turbine in operation until a known scheduled service event.

US 2011/0218957 A1 describes a request to diagnose a problem with an appliance is provided to a diagnostic system whereupon the diagnostic system functions to interpret the information indicative of the problem with the appliance to thereby normalize the information indicative of the problem with the appliance.

US 2013/0201018 A1 describes systems, methods, and apparatus are disclosed for monitoring appliances at a site, such as a household, business office, etc.

### [Disclosure of Invention]

### [Technical Problem]

An aspect of the invention is to address at least the above-mentioned problems and/or disadvantages and to provide at least the advantages described below. Accordingly, an aspect of the disclosure is to embodimentprovide a method and apparatus for controlling an appliance based on failure prediction.

Another aspect of the invention is to provide a method and apparatus for maintaining the normal operation of an appliance if a failure is predicted.

Another aspect of the invention is to provide a method and apparatus for delaying the occurrence of a failure in an appliance.

Another aspect of the invention is to provide a method and apparatus for fixing a predicted derivative failure when an engineer visits to repair a failure of an appliance.

Another aspect of the invention is to provide a method and apparatus for fixing both a predicted failure of another appliance and a failure of an appliance concurrently, i.e., in the same visit, when an engineer visits to repair the failure of the appliance.

### [Solution to Problem]

The invention is defined by the independent claims. Embodiments are defined by the dependent claims.

### [Brief Description of Drawings]

The above and other aspects, features, and advantages of the present disclosure will be apparent from the following detailed description taken in conjunction with the accompanying drawings, in which:
FIG. 1 illustrates a system for managing an appliance based on failure prediction according to an embodiment;
FIG. 2 illustrates an appliance which may be controlled based on failure prediction according to an embodiment;
FIG. 3 illustrates a managing server configured to manage an appliance based on failure prediction according to an embodiment;
FIG. 4 illustrates a user terminal which may control an appliance based on failure prediction according to an embodiment;
FIG. 5 illustrates an operation of an appliance according to an embodiment;
FIG. 6 illustrates an operation of a managing server for managing an appliance according to an embodiment;
FIG. 7 illustrates an operation of a user terminal for maintaining an appliance in a normal operation state according to an embodiment;
FIG. 8 illustrates an operation of an appliance according to an embodiment;
FIG. 9 illustrates an operation of generating normal operation maintenance information for an appliance in a managing server according to an embodiment;
FIG. 10 illustrates an operation of generating a virtual operation pattern in a managing server according to an embodiment;
FIGS. 11A, 11B, and 11C illustrate a scenario of maintaining a normal operation state of an air conditioner based on scheduling and control values of operation parameters of the air conditioner according to an embodiment;
FIGS. 12A, 12B, and 12C illustrate a scenario of maintaining a normal operation state of a washer based on scheduling and control values of operation parameters of the washer according to an embodiment;
FIGS. 13A, 13B, and 13C illustrate a scenario of maintaining a normal operation state of an air conditioner based on a control value of an operation parameter of the air conditioner according to an embodiment;
FIGS. 14A, 14B, and 14C illustrate a scenario of maintaining a normal operation state of a refrigerator based on a control value of an operation parameter of the refrigerator according to an embodiment;
FIGS. 15A, 15B, and 15C illustrate a scenario of maintaining a normal operation state of an appliance through use of a peripheral device according to an embodiment;
FIG. 16 illustrates a system of providing a repair service for repairing a predicted failure and a derivative failure of an appliance according to an embodiment;
FIG. 17 illustrates an operation of a user terminal for fixing a plurality of failures of an appliance concurrently according to an embodiment;
FIGS. 18A and 18B illustrate information about a derivative failure of an appliance displayed on a user terminal according to an embodiment;
FIG. 19 illustrates an operation of a managing server for fixing a primary failure and a derivative failure of an appliance according to an embodiment;
FIG. 20 illustrates an operation of a managing server for generating derivative failure information according to an embodiment;
FIG. 21 illustrates an operation of a managing server for searching for a derivative failure of an appliance according to an embodiment;
FIG. 22 illustrates a system for providing a repair service for repairing a predicted failure of an appliance and a failure of another appliance according to an embodiment;
FIG. 23 illustrates an operation of a user terminal for fixing a plurality of predicted failures of a plurality of appliances concurrently according to an embodiment;
FIGS. 24A and 24B illustrate information about a plurality of failures of a plurality of appliances displayed on a user terminal according to an embodiment;
FIG. 25 illustrates an operation of a managing server for fixing failures of a plurality of appliances according to an embodiment; and
FIG. 26 illustrates an operation of a managing server for generating failure prediction information of the second failure according to an embodiment.

Throughout the drawings, like reference numerals will be understood to refer to like parts, components, and structures.

### [Mode for the Invention]

Hereinafter, embodiments are described in detail with reference to the accompanying drawings. Descriptions of well-known functions and/or configurations will be omitted for the sake of clarity and conciseness.

For the same reasons, some elements may be exaggerated or schemaitcally shown. The size of each element does not necessarily reflect the actual size of the element. The same reference numeral is used to refer to the same element throughout the drawings and detailed description.

Advantages and features of the disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skill in the art of the category of the disclosure, as defined only by the appended claims.

It should be appreciated that the blocks in each flowchart and combinations of the flowcharts may be performed by computer program instructions equipped in a processor of a general-use computer, a special-use computer or other programmable data processing devices. The instructions generate means for performing the functions described in connection with a block(s) of each flowchart. Since the computer program instructions may be stored in a computer-available or computer-readable memory that may be oriented to a computer or other programmable data processing devices to implement a function in a specified manner, the instructions may produce a product including an instruction means for performing the functions described in connection with blocks in each flowchart. Since the computer program instructions may be equipped in a computer or other programmable data processing devices, instructions that generate a process executed by a computer as a series of operational steps are performed over the computer or other programmable data processing devices, and operating the computer or other programmable data processing devices may provide steps for executing the functions described in connection with blocks in each flowchart.

Each block may represent a module, segment, or part of a code including one or more executable instructions for executing a specified logical function(s). In some replacement execution examples, the functions mentioned in the blocks may occur in different orders. For example, two blocks that are consecutively shown may be performed substantially simultaneously or in a reverse order depending on corresponding functions.

As used herein, the term "unit" indicates a software element or a hardware element, such as a field-programmable gate array (FPGA) or an application specific integrated circuit (ASIC). Although a unit plays a certain role, the term "unit" is not limited to indicating a software or hardware element, and may be configured in a storage medium that may be addressed or configured to reproduce one or more processors. Accordingly, a "unit" may include elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a "unit" may be combined with additional elements, may be split into sub elements or sub units, and may be implemented to reproduce one or more central processing units (CPUs) in a device or a security multimedia card.

Although the description of embodiments herein mentions various particular systems and signal standards, the subject matter of the disclosure may also be applicable to other systems or services having similar technical backgrounds without departing from the scope of the disclosure, and this may be determined by one of ordinary skill in the art.

According to an embodiment, a user terminal may be an electronic device equipped with a communication feature, may provide a user interface (UI) to the user of the user terminal, and may communicate with at least one server over an external network and at least one appliance over a home network directly or via at least one network node, such as a home gateway, CPE, or router. The electronic device may be a portable electronic device, wearable electronic device, or mountable electronic device, for example.

The portable electronic device may include, but is not limited to, at least one of a smartphone, feature phone, tablet PC, laptop computer, video phone, electronic book reader, portable digital assistant (PDA), portable media player (PMP), moving picture experts group (MPEG) layer audio 3 (MP3) player, mobile medical device, electronic dictionary, electronic key, camcoder, or camera.

The wearable electronic device may include, but is not limited to, at least one of an accessory-type device, such as a watch, ring, bracelet, anklet, necklace, glasses, contact lenses, or head-mounted device (HMD), a fabric- or clothes-integrated device, such as electronic clothes or exercise clothing, a body attaching-type device, such as a skin pad or tattoo, or a body implantable device, such as an implantable circuit.

According to embodiments, the electronic device may be one or a combination of the above-listed devices, and may be a flexible electronic device. The electronic device disclosed herein is not limited to the above-listed devices and may include new electronic devices depending on the development of technology.

Various terms and expressions as used herein may be defined as follows.
- Appliance refers to smart appliances and electronic devices that may be installed in homes or offices and are equipped with the Internet access feature.
- Managing server refers to a server that may be operated by the appliance manufacturer or manager and may communicate with a user terminal and/or at least one appliance. The managing server may include a failure prediction knowledge database (DB) that may be used to predict failures of the appliances based on the gathered operation data.
- A failure prediction knowledge DB stores information used to predict a failure in various appliances, such as at least one of operation data, failure history, a control method for failure delay, failure repair history, manufacture information, environment information, and customer profile information.
- Operation data is related to the operation of the appliance and may include at least one of sensor data gathered from at least one sensor in the appliance and an operation history.
- An operation history refers to data that records operations as per the actual use of the appliance, and may include at least one of run-time, operation mode, operation period, operation count, and operation parameter of an appliance (or each component of the appliance). Operation parameter refers to information necessary for operation in each operation mode, such as a set temperature for an air conditioner, a load, dehydration level and dry level set for a washer, or a set temperature and a defrost cycle for a refrigerator.
- Normal operation maintenance information is required for maintaining the normal operation state (i.e., in which there is no failure) of an appliance, and may be generated by considering a predicted failure of the appliance. For example, the normal operation maintenance information may define at least one of an operation per time (on/off or an operation mode) of the appliance and an operation pattern indicating a control value of an operation parameter for each operation, normal operation time information indicating a time duration during which it is predicted that normal operation in which a failure does not occur is possible if the normal operation maintenance information is applied, and at least one peripheral device which will be used for replacing or supplementing the appliance. For example, the normal operation maintenance information may define at least one normal operation maintenance mode which may delay the predicted failure of the appliance.
- A normal operation maintenance mode denotes an operation mode for delaying a predicted failure of an appliance such that the appliance maintains the state in which the appliance normally operates, and may also be referred to as failure delay mode. Each normal operation maintenance mode defines at least one of a failure item of a predicted failure, an operation per time (on/off or an operation mode) of an appliance and an operation pattern indicating a control value of an operation parameter for each operation, normal operation time information indicating a time duration during which it is predicted that normal operation is possible if corresponding normal operation maintenance information is applied, and at least one peripheral device which will be used for replacing or supplementing the appliance.
- An operation pattern indicates an operation required per time and a control value(s) of an operation parameter(s) for a corresponding operation of an appliance. For example, an operation pattern for an air conditioner may be 9:00 am - 12:00 pm: weak wind & set temperature 70 degrees Farenheit (F), 3:00 pm - 4:00 pm: weak wind & set temperature 72 degrees F, and 8:00 pm- 8:30 pm: automatic. For another example, an operation pattern for a washer may be Monday: load 85kg & dehydration level 3 & dry level 2, Wednesday: load 5kg & dehydration level 3 & dry level 3, and Friday: load 5kg & dehydration level 3 & dry level 2.
- A user preference criterion defines an operation pattern which a user requests or prefers. For example, a user preference criterion for an air conditioner may include at least one of a minimum set temperature and minimum run time. For another example, a user preference criterion for a washer may include at least one of an operation count per week, an operation date, a minimum load, a minimum dehydration level, and a minimum dry level.
- Failure prediction information indicates a predicted failure of an appliance, and may be generated by a managing server based on a failure prediction knowledge DB. The failure prediction information may include at least one of a failure item, a predicted failure time point, and the degree of risk of the predicted failure.
- A derivative failure denotes another failure which may derive due to a failure which occurs in an appliance or a predicted failure of the appliance. Derivative failure information indicating a derivative failure may be generated based on the failure history of the same or similar type appliances. A failure item within a failure prediction knowledge DB may be linked to at least one derivative failure.
- Recommended schedule information indicates a schedule recommended by a managing server such that a repair service may be used. For example, the recommended schedule information indicates the hour, day, month, and year.
- The same premises spaces denote a space identified by the same address such as a home or an office.

The disclosure describes techniques for extending the state at which an appliance normally operates by delaying a failure of the appliance based on a predicted failure of the appliance.

The disclosure provides a provision of a home visit repair service which may repair a failure occurring in an appliance or a predicted failure of the appliance and a derivative failure related to the failure occurring in the appliance or the predicted failure of the appliance through one visit-.

The disclosure provides a provision of a home visit repair service which may repair a failure occurring in an appliance or a predicted failure of the appliance and a failure which is predicted for another appliance within the same home as the appliance through one visit-.

As used herein, the term "user" may denote a human or an artificial intelligent electronic device using the electronic device.

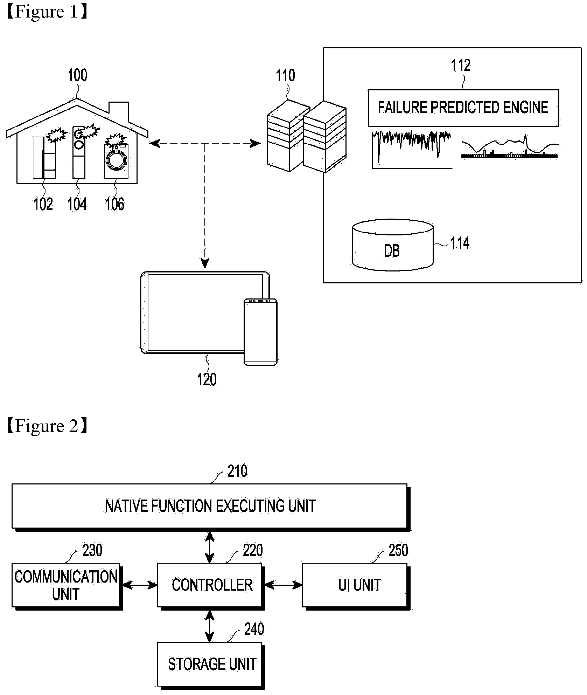

FIG. 1 illustrates a system for managing an appliance based on failure prediction according to an embodiment.

Referring to FIG. 1, a home system 100 includes one or more appliances 102, 104, and 106, at least one of which may be a smart appliance with an Internet access feature and may communicate with a user terminal 120 and/or a managing server 110 using a wired or wireless communication scheme, such as wireless-fidelity (Wi-Fi), Zigbee^{®}, Bluetooth^{®}, near-field communication (NFC), or z-wave. At least one of appliances 102, 104, and 106 may communicate with the managing server 110 directly or via the user terminal 120, a home gateway, or a CPE, may be one of a refrigerator, washer, air conditioner, oven, robot cleaner, television, air circulator, air purifier, and dehumidifier, for example, and may be a smart appliance that is not shown or mentioned herein.

The appliances 102, 104, and 106 may be configured to receive control commands from the user terminal 120 or the managing server 110, operated as per the control commands, and to transmit requested information and/or operation data to the user terminal 120 or the managing server 110. For example, the appliances 102, 104, and 106 may receive failure predication information and/or normal operation maintenance information from the managing server 110 through the user terminal 120 or directly from the managing server 110, and operate in one of at least one normal operation maintenance mode defined by the normal operation maintenance information. The appliances 102, 104, and 106 may have a user interface to receive user input about whether to execute a normal operation maintenance mode, display the at least one normal operation maintenance mode defined by the normal operation maintenance information, and request of a user to select a normal operation maintenance mode preferred by the user.

The managing server 110 has a failure prediction knowledge DB 114 which stores information that may be used for predicting failures of the appliances 102, 104, and 106 and a failure prediction engine 112 for predicting failures which may occur in the appliances 102, 104, and 106 based on the failure prediction knowledge DB 114. The managing server 110 may generate failure prediction information for the appliances 102, 104, and 106 and normal operation maintenance information according to the failure prediction information using the failure prediction knowledge DB 114 and the failure prediction engine 112, and provide the appliances 102, 104, and 106 with the failure prediction information and/or the normal operation maintenance information.

It will be described herein that the managing server 110 may further store and manage information related to a home visit repair service for the appliances 102, 104, and 106, a failure history, and failure repair history. However, a customer service (CS) server, which is a separate network entity for gathering, storing, and managing the information related to the home repair service for the appliances 102, 104, and 106, the failure history, and failure repair history information, may be configured to communicate with the managing server 110 according to an implementation. In other words, the managing server 110 may be implemented with one or more logical/physical entities, may manage at least one user terminal 130 that is registered in association with the appliances 102, 104, and 106, and may communicate the information related to the appliances 102, 104, and 106 to the registered user terminal 120.

The user terminal 120 may communicate with the one or more appliances 102, 104, and 106 which may be located at the same home or at different homes directly or through a home gateway or a CPE, and may receive failure prediction information and/or normal operation maintenance mode information for at least one of the appliances 102, 104, and 106 from the managing server 110 to transmit the information to a corresponding appliance. The user terminal 120 may gather operation data from the appliances 102, 104, and 106, and transmit the gathered operation data to the managing server 110. The user terminal 120 may receive user input about whether to execute a normal operation maintenance mode through a user interface, display information about at least one normal operation maintenance mode defined by the normal operation maintenance information, and request of a user to select a normal operation maintenance mode preferred by the user among the displayed at least one normal operation maintenance mode.

FIG. 2 illustrates an appliance which may be controlled based on failure prediction according to an embodiment. The appliance may be configured with at least one of a native function executing unit 210 (also referred to herein as an "executing unit"), a controller 220, a communication unit 230, a storage unit 240, and a user interface (UI) unit 250.

The native function executing unit 210 includes software and hardware components for executing the native functions of the appliance. In examples, when the appliance is an air conditioner, the native function executing unit 210 may include a fan, compressor, condenser, evaporator, expansion valve, and various sensors for gathering data. When the appliance is a washer, the native function executing unit 210 may include a door, light, power source, tub, speed changer, motor, pump, heater, temperature adjuster, and various sensors. When the appliance is a refrigerator, the native function executing unit 210 may include a door, light, power source, fan, evaporator, condenser, compressor, defrost circuit (e.g., a defrost sensor, heater, or timer), and various sensors. The native function executing unit 210 may receive control values for operation parameters necessary to operate the components from the controller 220 and may operate each component using the operation parameters.

The controller 220 may manage operation data of an appliance, gather sensor data by monitoring the operation history of the native function executing unit 210, and transmit the operation data to a managing server and/or a user terminal through the communication unit 230. The operation data may include at least one of the operation history and sensor data gathered from at least one sensor within the native function executing unit 210. The operation history denotes data in which an operation of the native function executing unit 210 is recorded, and may include at least one of run time, operation mode, operation cycle, and operation count. The controller 220 may receive failure prediction information and/or normal operation maintenance information from the managing server to control an operation of the native function executing unit 210 according to the received information.

The communication unit 230 includes a communication interface that supports the controller 220 to be able to communicate with the user terminal and/or the managing server over the Internet. As an example, the communication unit 230 may include a wired communication module and/or a wireless communication module that supports at least one of Wi-Fi, zigbee^{®}, bluetooth^{®}, NFC, and z-wave and may access the managing server and/or user terminal directly or via a home gateway or CPE.

The storage unit 240 may include a read-only memory (ROM), which stores a control program to operate the appliance, and a random-access memory (RAM), which stores signals or data input from outside of the appliance or is used as a storage area for tasks performed on the appliance. In examples, the storage unit 240 stores operation data related to the appliance, such as sensor data and operation history gathered through the actual operation of the native function executing unit 210, and stores normal operation maintenance information used for controlling the native function executing unit 210.

The UI unit 250 may provide failure prediction information, normal operation maintenance information, and home visit repair service schedule, delivered from the controller 220 to the user or may receive a user input and deliver the input to the controller 220. To that end, the UI unit 250 may include a display, a touchscreen, at least one physical button, at least one light emitting diode (LED), a microphone, and/or a speaker.

While the native function executing unit 210, controller 220, communication unit 230, storage unit 240, and UI unit 250 are described in the appliance as separate units in FIG. 2, the appliance may be implemented in a form in which at least two of these components are integrated.

Each of the native function executing unit 210, the controller 220, the communication unit 230, the storage unit 240, and the UI unit 250 may be implemented with at least one processor. The appliance may also be implemented with at least one processor.

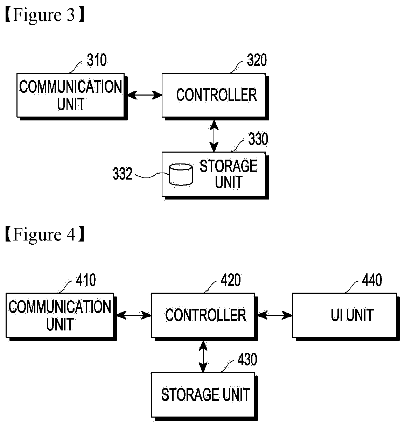

FIG. 3 illustrates a managing server configured to manage an appliance based on failure prediction according to an embodiment. The managing server may be configured with at least one of a communication unit 310, a controller 320, and a storage unit 330.

The communication unit 310 includes a communication interface that supports the controller 320 to enable communication through the Internet with at least one appliance, user terminal, and/or at least one network entity. The network entity may be, such as a CS server that manages the CS for the appliance.

The controller 320 predicts a failure of an appliance based on operation data of at least one appliance received from the communication unit 310, and generates failure prediction information indicating the predicted failure. The controller 320 may generate normal operation maintenance information required for maintaining the normal operation of the appliance by delaying the predicted failure related to the failure prediction information. The failure prediction information and/or normal operation maintenance information may be transmitted to a corresponding appliance and/or user terminal through the communication unit 310. The controller 320 may communicate with a CS server that manages the repair service through the communication unit 310, send a request for the repair service to the CS server, and receive, through the communication unit 310, information related to the repair service, the failure history, and failure repair history, from the CS server. The controller 320 may deliver, to the CS server, information available for the repair service, such as operation data, failure history, failure repair history, manufacture information, environment information about the environment (mean temperature, mean humidity, or installation height) where the appliance is installed, and customer profile information. If there is a predicted failure for a corresponding appliance, the controller 320 may further provide the CS server with failure prediction information and/or normal operation maintenance information.

The storage unit 330 may include a ROM, which stores a control program to operate the managing server, and a RAM, which stores signals or data input from outside of the managing server or is used as a storage area for tasks performed on the managing server. The storage unit 330 further includes a failure prediction knowledge DB 332 that stores information available for predicting a failure in at least one appliance. The failure prediction knowledge DB 332 may store at least one of operation data, failure histories, control methods for delaying failure, failure repair histories, manufacture information, environment information, and customer profile information. The storage unit 330, the failure prediction knowledge DB 332, or a separate storage space may store failure prediction information and/or normal operation maintenance information generated by the controller 320 for each appliance.

While the communication unit 310, the controller 320, and the storage unit 330 are described in the managing server as separate units in FIG. 3, the managing server may be implemented in a form in which at least two of the communication unit 310, the controller 320, and the storage unit 330 are integrated. Each of the communication unit 310, the controller 320, and the storage unit 330 may be implemented with at least one processor. The managing server may also be implemented with at least one processor.

FIG. 4 illustrates a user terminal which may control an appliance based on failure prediction according to an embodiment. The user terminal may be configured with at least one of a communication unit 410, a controller 420, a sensing unit 430, and a user interface (UI) unit 440. The communication unit 410 includes a communication interface that supports the controller 420 to be able to communicate with at least one appliance and/or the managing server over the Internet. As an example, the communication unit 410 may include a wired communication module and/or a wireless communication module that supports at least one of Wi-Fi, zigbee^{®}, bluetooth^{®}, NFC, and z-wave and may access the appliance directly or via a home gateway or CPE. The communication unit 410 may include a broadband communication module such as 3rd generation partnership project (3GPP) or long-term evolution (LTE) and may communicate with the managing server via the Internet.

The controller 420 may receive failure prediction information and/or normal operation maintenance information for an appliance from a managing server through the communication unit 420, and transmit the failure prediction information and/or normal operation maintenance information to the appliance. In examples, the controller 420 may transmit, to the appliance, information about at least one normal operation maintenance mode which a user selects through the UI unit 440 from among a plurality of normal operation maintenance modes defined by the normal operation maintenance information, or may gather operation data from the appliance and transmit the gathered operation data to the managing server.

The storage unit 430 may include a ROM, which stores a control program to operate the user terminal, and a RAM, which stores signals or data input from outside of the user terminal or is used as a storage area for tasks performed on the user terminal. The storage unit 430 may store the normal operation maintenance information to be used for controlling the appliance.

The UI unit 440 may provide information, such as failure prediction information, normal operation maintenance information, or a repair service schedule, delivered from the controller 420 to the user or may receive a user input and deliver the input to the controller 420. To that end, the UI unit 440 may include a display, a touchscreen, at least one physical button, at least one light emitting diode (LED), a microphone, and/or a speaker.

While the communication unit 410, the controller 420, the storage unit 430, and the UI unit 440 are described in the user terminal as separate units in FIG. 4, the user terminal may be implemented in a form in which at least two of these components are integrated. Each of the communication unit 410, the controller 420, the storage unit 430, and the UI unit 440 may be implemented with at least one processor. The user terminal may also be implemented with at least one processor.

At least one of the controllers 220, 320, and 420 of FIGS. 2 to 4 may be produced in at least one hardware chip and equipped in an electronic device. For example, the controller may be formed in a dedicated hardware chip for AI or in a part of an existing general-purpose processor, such as a CPU or application processor, or a graphic dedicated processor, such as a graphics processing unit (GPU), and be equipped in various electronic devices. In this case, the dedicated hardware chip for AI may be a dedicated processor specified for probability computations, which may quickly process AI computation tasks, such as machine learning, with better parallel processing performance than existing general-purpose processors.

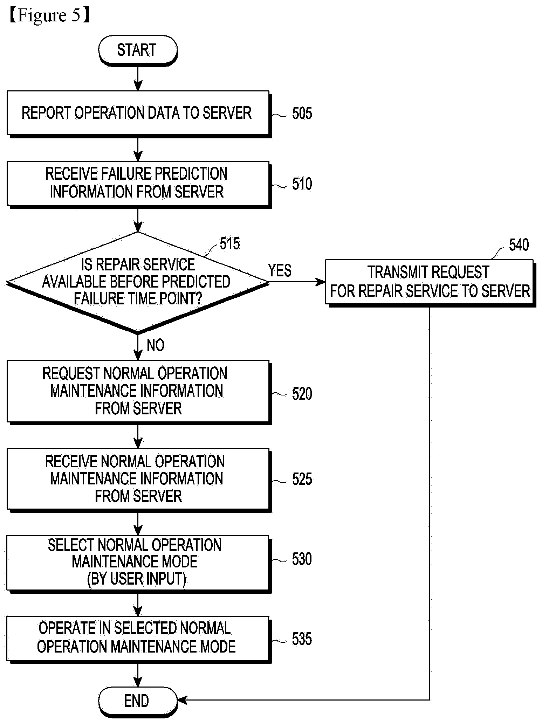

FIG. 5 illustrates an operation of an appliance according to an embodiment. Referring to FIG. 5, an appliance transmits, to a managing server, operation data according to the execution of a unique operation in step 505. The operation data may include at least one of an operation history and sensor data of the appliance, is periodically transmitted to the managing server, or is transmitted to the managing server according to a predetermined event or according to a request of the managing server.

The appliance receives failure prediction information indicating a predicted failure of the appliance from the managing server in step 510. The failure prediction information is generated by the managing server if the managing server determines that a failure of the appliance is predicted based on operation data gathered from the appliance. The failure prediction information may include at least one of a failure item of the predicted failure, and a predicated failure time point, such as at least one date when a failure may occur or the first date and the last date when the failure may occur. The appliance may receive recommended schedule information indicating a recommended schedule of a repair service to repair the predicated failure along with the failure prediction information, and indicating the schedule of an engineer who may visit to provide the repair service and at least one recommended time point/item determined by considering the predicted failure time point.

The appliance determines whether a repair service for repairing the predicted failure is available before it reaches the predicated failure time point included in the failure prediction information in step 515. For this, the appliance may display the failure prediction information and receive user input for whether the user may use the repair service before the predicated failure time point. For example, the appliance may determine a service availability schedule indicating a time point or duration at which a user may use the repair service for repairing the predicted failure by user input, and compare the determined service availability schedule with the predicted failure time point. If the user input indicating that a user uses the repair service before the predicted failure time point is received, that is, if the determined service availability schedule is before the predicted failure time point, the appliance may transmit a request signal for the repair service to the managing server in step 540. For example, the request signal may include a date and time, which are determined based on the recommended schedule information provided from the managing server.

If the user input indicating that the user does not use the repair service before the predicted failure time point is received, that is, if the determined service availability schedule is after the predicted failure time point, the appliance transmits a request signal for normal operation maintenance information required for maintaining the normal operation state to the managing server in step 520. The request signal may include information about a user preference criterion which the user requests for an operation of the appliance. The user preference criterion defines an operation pattern of the appliance which the user requests or prefers, such as at least one of the performance of the appliance or the failure delay availability time, which the user requests. A user preference criterion for an air conditioner may include at least one of a minimum set temperature and minimum run time. A user preference criterion for a washer may include at least one of operation counts per week, an operation date, a minimum load, a minimum dehydration level, and a minimum dry level.

The appliance receives, from the managing server, the normal operation maintenance information required for maintaining the normal operation state of the appliance in response to the request signal for the normal operation maintenance information in step 525. The normal operation maintenance information may define at least one normal operation maintenance mode, and each normal operation maintenance mode defined by the normal operation maintenance information may include at least one of a failure item of a predicted failure, an operation per time of the appliance and an operation pattern indicating a control value of an operation parameter for each operation, normal operation time information (or a delayed failure time point) indicating a time duration during which it is predicted that normal operation is possible if a corresponding normal operation maintenance mode is applied, and information about at least one peripheral device which will be used for replacing or supplementing the appliance.

The appliance displays information of at least one normal operation maintenance mode defined by the normal operation maintenance information and receives user input for selecting a normal operation maintenance mode which is applied to the appliance based on the at least one normal operation maintenance mode in step 530. The appliance executes a native function of the appliance according to a normal operation maintenance mode selected by the user input in step 535. The appliance operates according to the normal operation maintenance mode, so the appliance may delay the occurrence of a failure to a time point after a predicted failure time point and a user may more leisurely use a repair service.

Although FIG. 5 illustrates an operation of an appliance according to an embodiment, various changes could be made to FIG. 5. For example, although shown as a series of operations, various operations in FIG. 5 could overlap, or occur in parallel, in a different order, or multiple times.

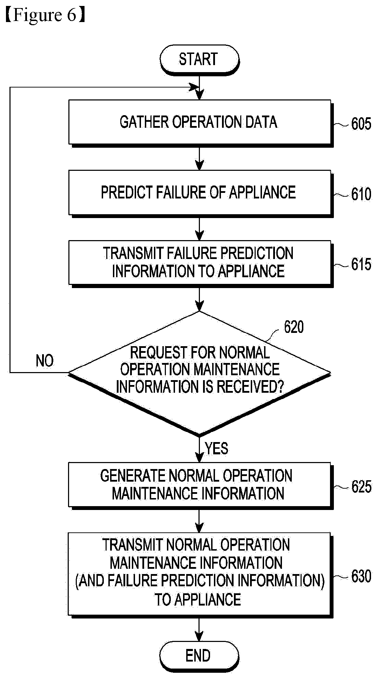

FIG. 6 illustrates an operation of a managing server for managing an appliance according to an embodiment. Referring to FIG. 6, a managing server gathers operation data of an appliance in step 605. The operation data occurs according to whether the appliance executes a native function, and may include at least one of an operation history and sensor data of the appliance. The managing server may generate a failure prediction knowledge DB which may be used for predicting failures of appliances using the operation data and operation data gathered from other appliances. For example, the failure prediction knowledge DB may include at least one of operation data, operation history, a control method for failure delay, failure repair history, manufacture information, environment information, and customer profile information.

The managing server determines whether there is a predicted failure of the appliance using the failure prediction knowledge DB in step 610. If there is the predicted failure, the managing server generates failure prediction information indicating the predicted failure and transmits the failure prediction information to the appliance in step 615.

The managing server determines whether a request signal for normal operation maintenance information is received from an appliance related to the predicted failure in step 620. If the request signal for the normal operation maintenance information is not received, the managing server returns to step 605.

If the request signal for the normal operation maintenance information is received, the managing server generates normal operation maintenance information required for maintaining the normal operation state of the appliance by delaying the predicted failure in step 625. For example, the normal operation maintenance information may indicate at least one normal operation maintenance mode which may delay the predicted failure and which may include at least one of a failure item of a predicted failure, an operation per time of the appliance and an operation pattern indicating a control value of an operation parameter for each operation, normal operation time information (or a delayed failure time point) indicating a time duration during which it is predicted that normal operation is possible if corresponding normal operation maintenance information is applied, and information about at least one peripheral device which will be used for replacing or supplementing the appliance.

The managing server transmits the generated normal operation maintenance information to the appliance in step 630. At this time, failure prediction information related to the generated normal operation maintenance information may be transmitted to the appliance along with the generated normal operation maintenance information.

Although FIG. 6 illustrates an operation of a managing server for managing an appliance according to an embodiment, various changes could be made to FIG. 6. For example, although shown as a series of operations, various operations in FIG. 6 could overlap, or occur in parallel, in a different order, or multiple times.

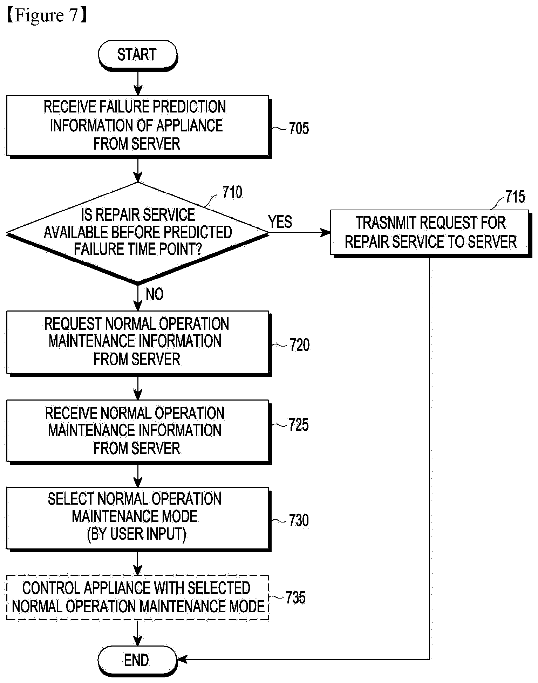

FIG. 7 illustrates an operation of a user terminal for maintaining an appliance in a normal operation state according to an embodiment. Referring to FIG. 7, a user terminal receives failure prediction information indicating a predicted failure of an appliance from a managing server in step 705. The failure prediction information may be generated by the managing server if the managing server determines that a failure of the appliance is predicted based on operation data gathered from the appliance. The user terminal may receive recommended schedule information indicating a recommended schedule of a repair service for repairing the predicted failure along with the failure prediction information.

The user terminal determines whether the repair service for repairing the predicted failure is available before it reaches the predicated failure time point included in the failure prediction information in step 710. For this, the user terminal may display the failure prediction information and receive, from the user, user input for whether the user may use the repair service before the predicated failure time point. If a user input indicating that the user will use the repair service before the predicted failure time point is received, the user terminal may transmit a request signal for the repair service to the managing server in step 715. The request signal may include a date and time, which are determined based on the recommended schedule information provided from the managing server.

If a user input indicating that the user will not use the repair service before the predicted failure time point is received, the user terminal transmits a request signal for normal operation maintenance information required for maintaining the normal operation state to the managing server in step 720. For example, the request signal may include information about a user preference criterion which the user requests for an operation of the appliance and which defines at least one of performance and failure delay availability time of the appliance which the user requests or prefers.

The user terminal receives, from the managing server, the normal operation maintenance information in response to the request signal for the normal operation maintenance information in step 725. The normal operation maintenance information may define at least one normal operation maintenance mode including at least one of a failure item of the predicted failure, an operation per time of the appliance and an operation pattern indicating a control value of an operation parameter for each operation, normal operation time information (or a delayed failure time point) indicating a time duration during which it is predicted that normal operation is possible if the normal operation maintenance mode is applied, and information about at least one peripheral device which will be used for replacing or supplementing the appliance.

The user terminal displays information of at least one normal operation maintenance mode defined by the normal operation maintenance information and receives user input for selecting a normal operation maintenance mode which will be applied to the appliance based on the at least one normal operation maintenance mode in step 730. The user terminal controls the appliance according to a normal operation maintenance mode selected by the user input in step 735. The user terminal may transmit information about the operation pattern to the appliance for controlling the appliance such that the appliance operates according to an operation pattern which is based on the selected normal operation maintenance mode. For example, the information about the operation pattern includes at least one of an operation per time and a control value of an operation parameter for each operation. The user terminal may transmit, to at least one peripheral device which will be used for replacing at least part of functions of an appliance for which a failure is predicted, a control command including at least one of an operation per time (e.g., on/off or an operation mode) and control values of operation parameters of each operation. Occurrence of a failure of the appliance may be delayed after the predicted failure time point by controlling the appliance to operate according to the normal operation maintenance mode, to enable a user to more leisurely use a repair service.

Although FIG. 7 illustrates an operation of a user terminal for maintaining the normal operation state in an appliance according to an embodiment, various changes could be made to FIG. 7. For example, although shown as a series of operations, various operations in FIG. 7 could overlap, or occur in parallel, in a different order, or multiple times.

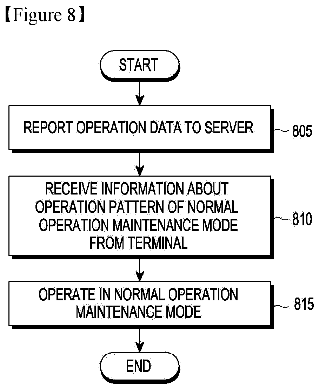

FIG. 8 illustrates an operation of an appliance according to an embodiment. Referring to FIG. 8, an appliance reports, to a managing server, operation data which occurs according to the execution of a native function in step 805. The operation data is reported to a user terminal, and may be transmitted to the managing server by the user terminal. The appliance receives, from the user terminal, information about an operation pattern for maintaining the normal operation in step 810. The information includes at least one of an operation per time and a control value of an operation parameter for each operation, and is generated by the user terminal according to one normal operation maintenance mode which is selected by the user terminal among at least one normal operation maintenance mode determined by the managing server.

The appliance operates in the normal operation maintenance mode according to at least one of the operation per time and the control value of the operation parameter for each operation indicated by the information about the operation pattern in step 815.

Although FIG. 8 illustrates an operation of an appliance according to an embodiment, various changes could be made to FIG. 8. For example, although shown as a series of operations, various operations in FIG. 8 could overlap, or occur in parallel, in a different order, or multiple times.

As described above, an appliance may delay the occurrence of a failure after a predicted failure time point by operating according to a normal operation maintenance mode, to enable a user to more leisurely use a repair service. The managing server may determine the normal operation maintenance mode which may be applied to the appliance by considering a predicted failure, and operation data and an operation pattern of the appliance.

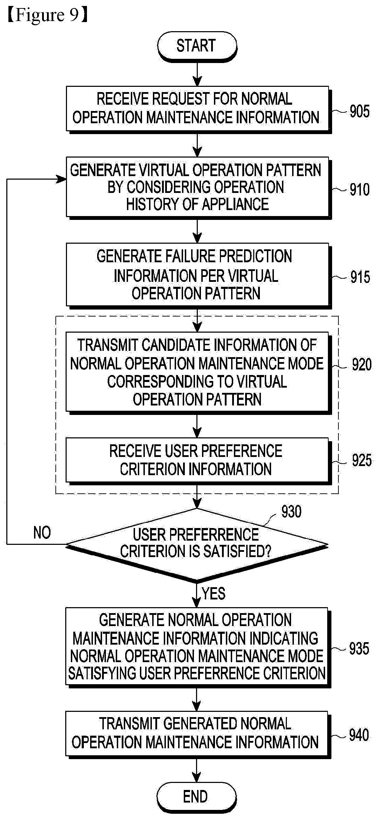

FIG. 9 illustrates an operation of generating normal operation maintenance information for an appliance in a managing server according to an embodiment.

Referring to FIG. 9, a managing server receives a request signal for normal operation maintenance information required for maintaining the normal operation state of an appliance of which a failure is predicted in step 905. For example, the request signal may be received from an appliance which operates as shown in step 520 of FIG. 5 or from a user terminal which operates as shown in step 720 of FIG. 7.

The managing server generates one or more virtual operation patterns which may delay a predicted failure of an appliance by considering an operation history of the appliance in step 910. Each virtual operation pattern may include an operation required per time and a control value(s) of an operation parameter(s) for a corresponding operation of the appliance. In examples, a virtual operation pattern for an air conditioner includes at least one of run time, such as in hours per day, an operation mode, such as strong wind, medium wind, weak wind, or dehumidification, and a set temperature. A virtual operation pattern for a washer includes at least one of run time, such as in days per week, load weight, an operation mode, such as washing, dehydration, or dry, and an operation level.

The managing server generates failure prediction information according to each virtual operation pattern in step 915. That is, the managing server predicts a failure which may occur when the appliance operates according to each virtual operation pattern, and generates the failure prediction information including an occurrence time point and the degree of risk of the predicted failure.

The managing server transmits, to a user terminal, candidate information indicating at least one candidate of a normal operation maintenance mode which corresponds to each virtual operation pattern in step 920, and receives, from the user terminal, user preference criterion information indicating an operation pattern which a user requests for the appliance or which the user prefers in step 925. That is, the user preference criterion information indicates an operation pattern in which the user requests the appliance to operate at a minimum. In examples, a user preference criterion for an air conditioner may include at least one of a minimum set temperature and minimum run time. A user preference criterion for a washer may include at least one of operation counts per week, an operation date, a minimum load, a minimum dehydration level, and a minimum dry level. The user preference criterion information may be generated based on each candidate of a normal operation maintenance mode indicated by the candidate information received from the managing server, and may further include information about a time duration, such as three days, five days, or seven days, during which it is desired that the normal operation of the appliance is possible.

FIG. 9 illustrates step 920, in which the managing server transmits the candidate information to the user terminal, and step 925, in which the managing server receives the user preference criterion information from the user terminal; however, at least one of step 920 and step 925 may be omitted according to implementation. In examples, the managing server may receive a request signal including the user preference criterion information in step 905 instead of omitting steps 920 and 925. If the candidate information is transmitted to the user terminal, the user terminal may transmit a response signal indicating at least one candidate which is selected according to user input based on the candidate information in step 920. The candidate information is transmitted to the appliance, and the managing server may receive the response signal indicating the at least one candidate which is selected according to the user input from the appliance.

The managing server determines whether each candidate of the normal operation maintenance mode determined in step 920 according to the user preference criterion information received in step 925 or step 905 satisfies the user preference criterion in step 930. If there is no candidate of the normal operation maintenance mode which satisfies the user preference criterion, the managing server returns to step 910. If there is a candidate of the normal operation maintenance mode which satisfies the user preference criterion, the managing server generates normal operation maintenance information indicating the normal operation maintenance mode which satisfies the user preference criterion in step 935. If there is one or more normal operation maintenance modes which satisfy the user preference criterion, the normal operation maintenance information may indicate the one or more normal operation maintenance modes, such as by further including information indicating a normal operation maintenance mode which is recommended among the one or more normal operation maintenance modes.

The managing server transmits, in step 940, the generated normal operation maintenance information to an appliance or a user terminal which transmits the request signal for the normal operation maintenance information in step 905. For example, the managing server may transmit failure prediction information which corresponds to each normal operation maintenance mode to a corresponding appliance or user terminal along with the normal operation maintenance information.

Although FIG. 9 illustrates an operation of generating normal operation maintenance information for an appliance in a managing server according to an embodiment, various changes could be made to FIG. 9. For example, although shown as a series of operations, various operations in FIG. 9 could overlap, or occur in parallel, in a different order, or multiple times.

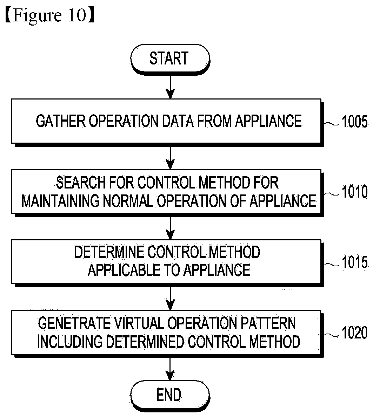

FIG. 10 illustrates an operation of generating a virtual operation pattern in a managing server according to an embodiment. The managing server may generate the virtual operation pattern in step 910 according to at least one of an embodiment as shown in FIG. 10 and embodiments which are not described in the disclosure.

Referring to FIG. 10, a managing server gathers operation data in which an operation of an appliance is recorded from the appliance in step 1005. For example, the operation data may include at least one of an operation history of the appliance and sensor data gathered from at least one sensor within the appliance. The managing server searches for a control method for delaying a predicted failure of the appliance using the operation data to maintain a normal operation state of the appliance from a failure prediction knowledge DB in step 1010. The control method may include at least one of control based on an operation per time and a control value of an operation parameter for each operation, and based on at least one peripheral device to be used for replacing or supplementing the appliance. The managing server determines a control method which may be applied to the appliance based on the searched result in step 1015, and determines a virtual operation pattern including the determined control method in step 1020.

Although FIG. 10 illustrates an operation of generating a virtual operation pattern in a managing server according to an embodiment, various changes could be made to FIG. 10. For example, although shown as a series of operations, various operations in FIG. 10 could overlap, or occur in parallel, in a different order, or multiple times.

Embodiments and scenarios for delaying a predicted failure of an appliance and in which a user terminal communicates with a managing server to maintain a normal operation of an appliance will be described below; however, it will be noted that a similar description may be applied to a case when the appliance, not the user terminal, communicates with the managing server to maintain the normal operation of the appliance.

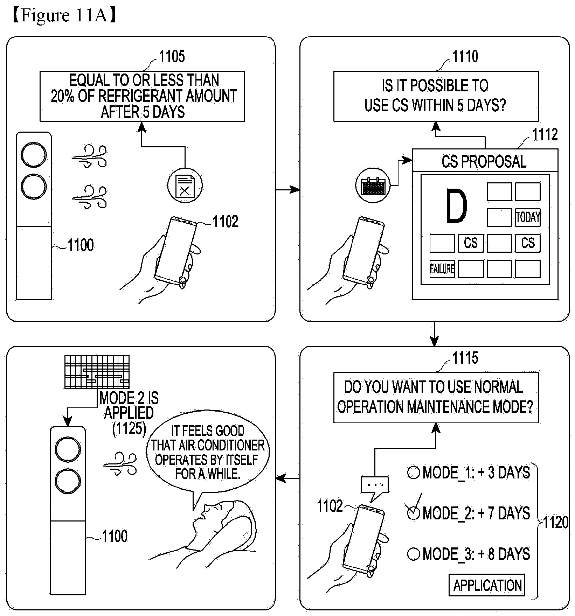

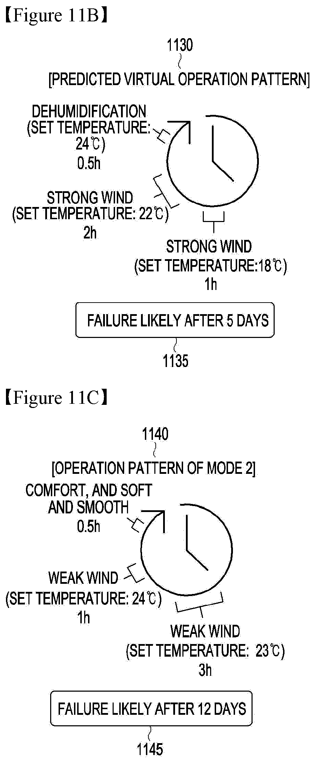

FIGS. 11A, 11B, and 11C illustrate a scenario of maintaining the normal operation state of an air conditioner based on scheduling and control values of operation parameters of the air conditioner according to an embodiment.

Referring to FIG. 11A, a user terminal 1102 may receive and display failure prediction information 1105 indicating a failure, which is predicted based on operation data of an air conditioner 1100, from a managing server. In FIG. 11A, the failure prediction information 1105 is displayed in the form "equal to or less than 20% of refrigerant amount after 5 days". The user terminal 1102 may display information 1110 and 1112 which inquires of a user whether a repair service is available before a predicted failure time point is reached, i.e., within "5 days". Specifically, the user terminal 1102 may display a phrase 1110 which proposes a repair service and the recommended schedule 1112 for when the repair service is available.

If user input indicating that the user will not use the repair service within "5 days" is received, the user terminal 1102 may display normal operation maintenance information received from the managing server to delay the predicted failure, in a phrase 1115 which inquires of the user whether to use a normal operation maintenance mode. If user input indicating that the user will use the normal operation maintenance mode is received, the user terminal 1102 displays information of one or more normal operation maintenance modes 1120 obtained through the normal operation maintenance information. In FIG. 11A, the information of the normal operation maintenance modes 1120 includes [mode 1: +3 days, mode 2: +7 days, and mode 3: +8 days]. In this manner, each normal operation maintenance mode may include information about how long the predicted failure may be delayed.

If user input is received selecting one of the displayed normal operation maintenance modes 1120, such as a normal operation maintenance mode 2 (1125), the user terminal 1102 transmits information about normal operation maintenance mode 2 to an air conditioner 1100, enabling the air conditioner 1100 to operate in normal operation maintenance mode 2. The normal operation maintenance mode 2 includes an operation pattern of the air conditioner 1100 which is determined such that a refrigerant amount of the air conditioner 1100 will be maintained at 20% or more after 5 days.

FIG. 11B illustrates a virtual operation pattern 1130 of an air conditioner 1100 which is generated based on operation data. The virtual operation pattern 1130 includes 11:00 am - 12:00 pm: strong wind & set temperature 18 degrees, 2:00 pm - 6:00 pm: strong wind & set temperature 22 degrees, and 8:00 pm - 8:30 pm: dehumidification & set temperature 24 degrees. If the air conditioner 1100 continuously operates with the virtual operation pattern 1130, it is predicted that a failure 1135, i.e., refrigerant shortage, will likely occur in the air conditioner 1100 after 5 days.

FIG. 11C illustrates an operation pattern 1140 according to a normal operation maintenance mode 2 selected by a user. The operation pattern 1140 includes 9:00 am - 12:00 pm: weak wind & set temperature 23 degrees, 3:00 pm - 4:00 pm: weak wind & set temperature 24 degrees, and 8:00 pm - 8:30 pm: automatic. Occurrence of a failure 1135 may be delayed for about 12 days by applying the operation pattern 1140 to an air conditioner (1145), such that the air conditioner may normally operate without refrigerant shortage for about 12 days, to enable a user to more leisurely determine a schedule for a repair service.

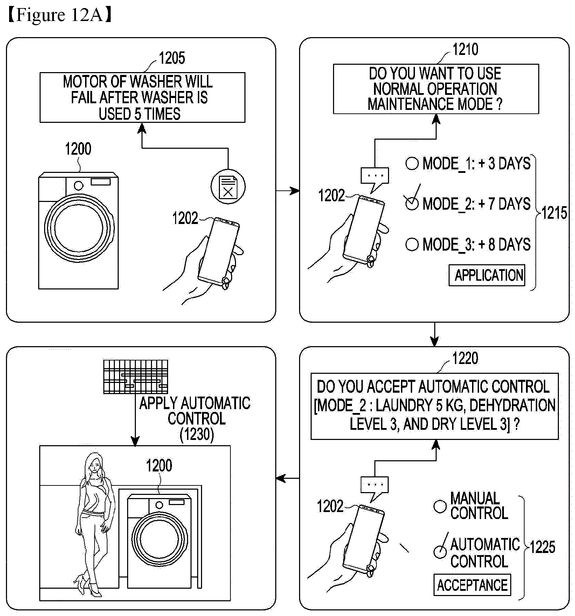

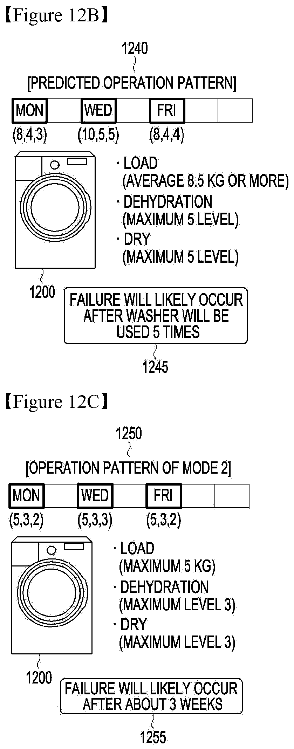

FIGS. 12A, 12B, and 12C illustrate a scenario of maintaining the normal operation state of a washer based on scheduling and control values of operation parameters of the washer according to an embodiment.

Referring to FIG. 12A, a user terminal 1202 may receive failure prediction information 1205 indicating a failure which is predicted based on operation data of a washer 1200 from a managing server, and display the failure prediction information 1205 as "Motor of washer will fail after the washer is used 5 times". The user terminal 1202 may display information 1210 which inquires of a user whether to use a normal operation maintenance mode in order to delay the predicted failure, by displaying information of one or more normal operation maintenance modes 1215 according to normal operation maintenance information received from a managing server in order to delay the predicted failure. In 1215, mode 1: +3 days, mode 2: +7 days, and mode 3: +8 days. In this manner, each normal operation maintenance mode may include information about how long the predicted failure may be delayed.

If user input is received selecting one of the displayed normal operation maintenance modes 1215, such as a normal operation maintenance mode 2, the user terminal 1202 displays information 1220 about an operation pattern of normal operation maintenance mode 2, and displays a phrase 1225 which inquires whether to accept automatic control according to the normal operation maintenance mode 2. If user input indicating acceptance of the automatic control according to the normal operation maintenance mode 2 is received, the user terminal 1202 transmits information about normal operation maintenance mode 2 to a washer 1200, enabling the washer 1200 to operate in normal operation maintenance mode 2 (1230) in an automatic control. Normal operation maintenance mode 2 includes an operation pattern such as laundry 5 kg, dehydration level 3, and dry level 3, and the washer 1200 which operates in normal operation maintenance mode 2 limits the load, dehydration level, and dry level according to the operation pattern of laundry weighing 5 kg, dehydration level 3, and dry level 3.

FIG. 12B illustrates a virtual operation pattern 1240 of a washer 1200 which is generated based on operation data. The virtual operation pattern 1240 includes Monday: load 8kg, dehydration level 4 & dry level 3, Wednesday: load 10kg, dehydration level 5 & dry level 5, and Friday: load 8kg, dehydration level 4 & dry level 4. If the washer 1200 continuously operates with the virtual operation pattern 1240, it is predicted that a motor failure 1245 will likely occur in the washer 1200 after the washer 1200 is used 5 times.

FIG. 12C illustrates an operation pattern 1250 according to a normal operation maintenance mode 2 selected by a user and including maximum load 5kg, maximum dehydration level 3, and a maximum dry level 3. A virtual operation pattern which is predicted when the operation pattern 1250 according to normal operation maintenance mode 2 is applied is limited to Monday: load 5kg, dehydration level 3 & dry level 2, Wednesday: load 5kg, dehydration level 3 & dry level 3, and Friday: load 5kg, dehydration level 3 & dry level 2. Occurrence of a failure 1245 may be delayed for about 3 weeks by applying the operation pattern 1250 to a washer 1200 (1255), such that the washer 1200 may normally operate without a motor failure for about 3 weeks, to enable a user to more leisurely determine a schedule for a repair service.

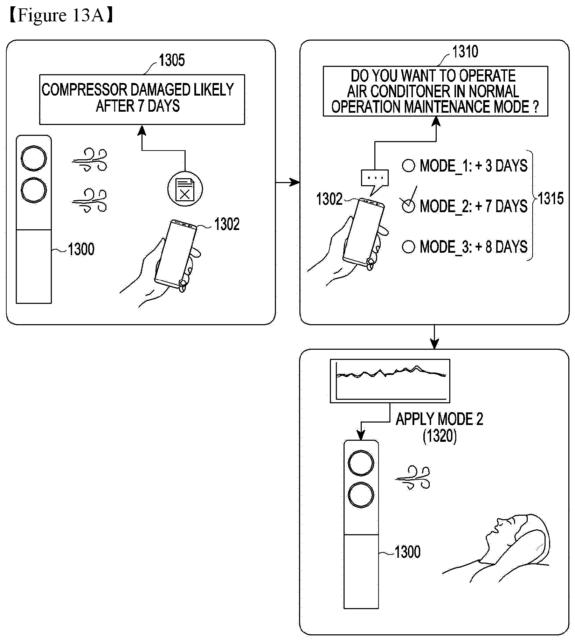

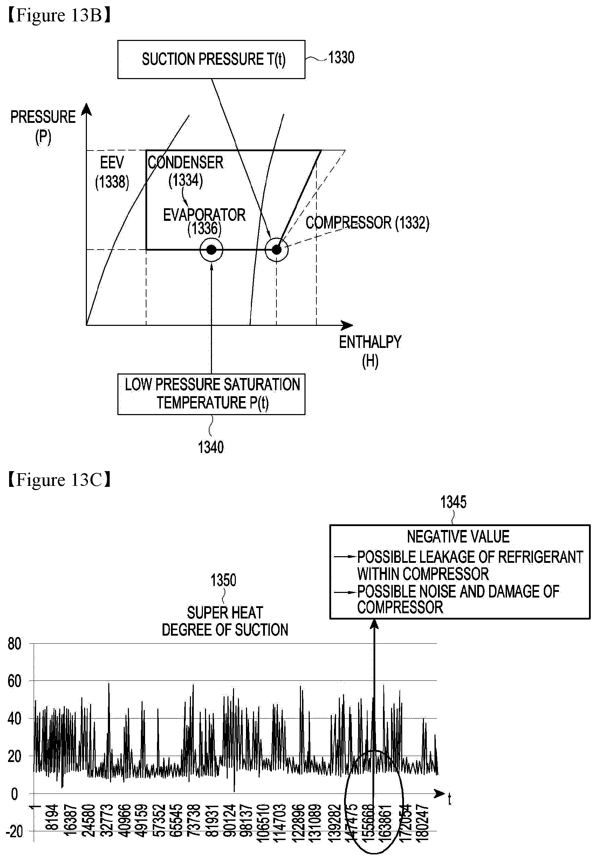

FIGS. 13A, 13B, and 13C illustrate a scenario of maintaining the normal operation state of an air conditioner based on a control value of an operation parameter of the air conditioner according to an embodiment.

Referring to FIG. 13A, a user terminal 1302 may receive failure prediction information 1305 indicating a failure, which is predicted based on operation data of an air conditioner 1300, from a managing server, and display the failure prediction information 1305. In FIG. 13A, the failure prediction information 1305 is displayed in the form "A compressor will likely be damaged after 7 days". The user terminal 1302 may display information 1310, which inquires of a user whether to use a normal operation maintenance mode in order to delay the predicted failure, and which is about one or more normal operation maintenance modes 1315 according to normal operation maintenance information received from the managing server in order to delay the predicted failure. In FIG. 13A, information of a plurality of normal operation maintenance modes 1315 is displayed as mode 1: +3 days, mode 2: +7 days, and mode 3: +8 days. In this manner, each normal operation maintenance mode may include information about how long the predicted failure may be delayed.

If user input is received selecting one of the displayed normal operation maintenance modes 1315, such as a normal operation maintenance mode 2, the user terminal 1302 transmits information about the normal operation maintenance mode 2 to an air conditioner 1300, enabling the air conditioner 1300 to operate in normal operation maintenance mode 2 (1320) including control values of a compressor frequency and/or electronic expansion valve (EEV) opening, among operation parameters for the air conditioner 1300.

Referring to FIG. 13B, an air conditioner 1300 includes a compressor 1332, a condenser 1334, an evaporator 1336, and an EEV 1338. The compressor 1332 compresses refrigerant in an air state by a compression motion to transfer a high temperature and high pressure refrigerant to the condenser 1334, which converts a refrigerant gas outputted from the compressor 1332 into a low temperature and high pressure liquid refrigerant to transfer the liquid refrigerant to the EEV 1338. Conversion of the low temperature and high pressure liquid refrigerant into a low temperature and low pressure liquid refrigerant is performed by the EEV 1338 in order to easily evaporate refrigerant in the evaporator 1336. The liquid refrigerant enters a state that easily evaporates when it encounters a duct that suddenly widens at an exit through the EEV 1338. The evaporator 1336 absorbs the hot air of the interior while transitioning liquid refrigerant into a gaseous state in order to transfer the hot air to an outdoor unit. At this time, the super heat degree of suction 1350 of the compressor 1332 is calculated by subtracting low pressure saturation temperature P(t) of the evaporator 1336 from suction pressure T(t) 1330.

Referring to FIG. 13C, if the super heat degree of suction 1350 is a negative value 1345, refrigerant within a compressor may be leaked, and noise or damage to a compressor may occur. As such, a managing server may predict a failure such as leakage of refrigerant or damage to a compressor based on suction pressure of a compressor 1332 and low pressure saturation temperature P(t) 1340 (see FIG. 13B) of an evaporator 1336 from among operation data gathered from an air conditioner 1300, by calculating the super heat degree of suction 1350 based on the suction pressure of the compressor 1332 and the low pressure saturation temperature P(t) 1340 of the evaporator 1336 and tracing the change in the calculated super heat degree of suction 1350.

A normal operation maintenance mode, which may be applied to the predicted failure, may include control values of compressor frequency and/or an EEV opening. The managing server provides the air conditioner 1300 with normal operation maintenance information indicating at least one normal operation maintenance mode including control values of compressor frequency and/or an EEV opening through the user terminal 1302, such that the air conditioner 1300 may operate according to these control values to delay the occurrence of a failure such as leakage of refrigerant or damage to a compressor.

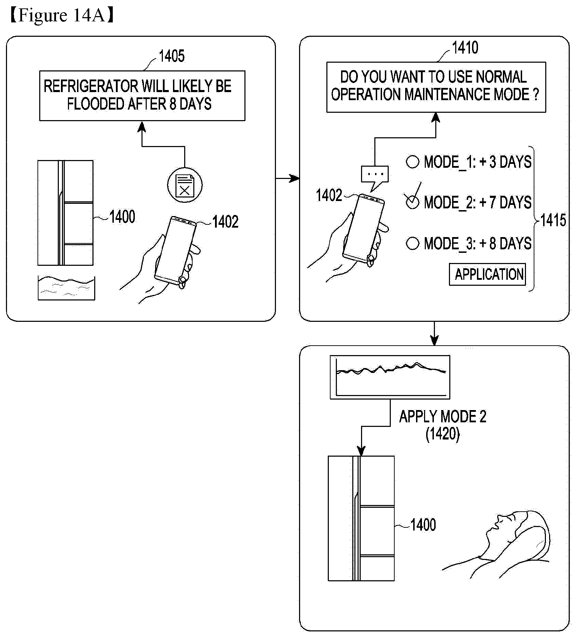

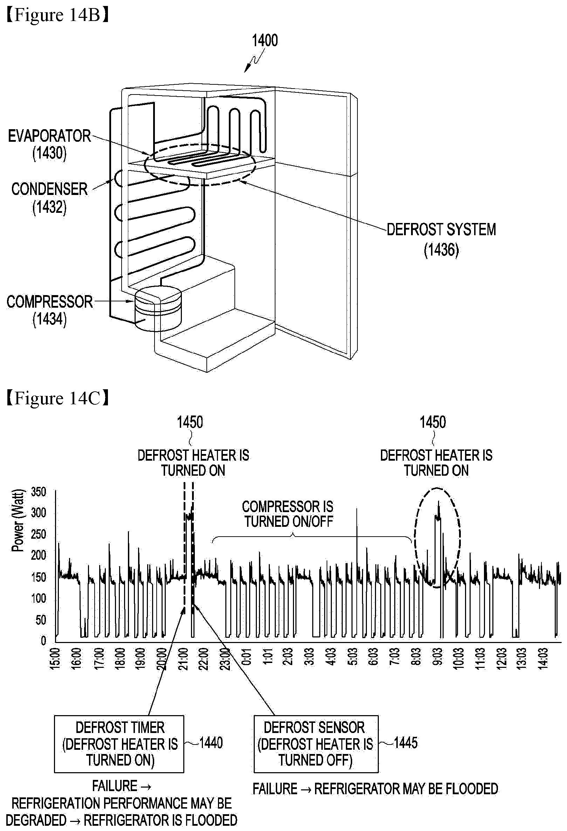

FIGS. 14A, 14B, and 14C illustrate a scenario of maintaining the normal operation state of a refrigerator based on a control value of an operation parameter of the refrigerator according to an embodiment.

Referring to FIG. 14A, a user terminal 1402 may receive failure prediction information 1405 indicating a failure which is predicted based on operation data of a refrigerator 1400 from a managing server, and display the failure prediction information 1405. In a shown example, the failure prediction information 1405 is displayed in the form "A refrigerator will likely be flooded after 8 days".

The user terminal 1402 may display information 1410 which inquires of a user whether to use a normal operation maintenance mode in order to delay the predicted failure, according to normal operation maintenance information received from the managing server in order to delay the predicted failure. In FIG. 14A, the information of the plurality of normal operation maintenance modes 1415 is displayed as mode 1: +3 days, mode 2: +7 days, and mode 3: +8 days. In this manner, each normal operation maintenance mode may include information about how long the predicted failure may be delayed.

If user input is received selecting one of the displayed normal operation maintenance modes 1415, such as a normal operation maintenance mode 2, the user terminal 1402 transmits information about normal operation maintenance mode 2 to the refrigerator 1400 to operate the refrigerator 1400 in normal operation maintenance mode 2 (1420), which includes a control value of a defrost cycle among operation parameters for the refrigerator 1400. As such, the refrigerator 1400 operates in normal operation maintenance mode 2 according to the control value of the defrost cycle.

Referring to FIG. 14B, a refrigerator 1400 includes a compressor 1434, a condenser 1432, and an evaporator 1430, and further includes a defrost system 1436 that adheres to the evaporator 1430, for periodically melting ice which accumulates in the evaporator 1430. The defrost system 1436 includes a defrost heater, a defrost sensor, and a defrost timer, and is configured to melt ice stuck to the evaporator 1430 by controlling the defrost heater with the defrost sensor and the defrost timer.

Referring to FIG. 14C, a defrost heater 1450 may be turned on whenever a defrost timer 1440, which operates according to a defrost cycle, expires in order to melt ice of an evaporator 1430, and may be turned off in response to a defrost sensor 1445. If a failure occurs in the defrost timer 1440, refrigeration performance is degraded and the defrost heater 1450 may not normally operate, causing water to accumulate in the refrigerator 1400. If a failure occurs in the defrost sensor 1445, a defrost system 1436 may not normally operate. A normal operation maintenance mode, which may be applied to a predicted failure of the defrost system 1436 such as the defrost timer 1440 or the defrost sensor 1445, may include a control value of a defrost cycle for the defrost timer 1440. A managing server may learn a defrost pattern based on information such as the inner temperature of a freezer/refrigerator room, a change in a temperature, and whether the door is open, gathered from a refrigerator 1400, and sense abnormalness of a defrost cycle by monitoring the learned defrost pattern. If the abnormalness of the defrost cycle is sensed, the managing server predicts a failure of the defrost system 1436 and determines a control value for a defrost cycle or a defrost control command (e.g., ON/OFF) using a defrost pattern which has already been learned. Normal operation maintenance information indicating at least one normal operation maintenance mode including the determined control value for the defrost cycle or defrost control command is provided to the refrigerator 1400 through the user terminal 1402, and the refrigerator 1400 may delay a failure which may occur in the refrigerator 1400 by operating according to the control value for the defrost cycle or the defrost control command.

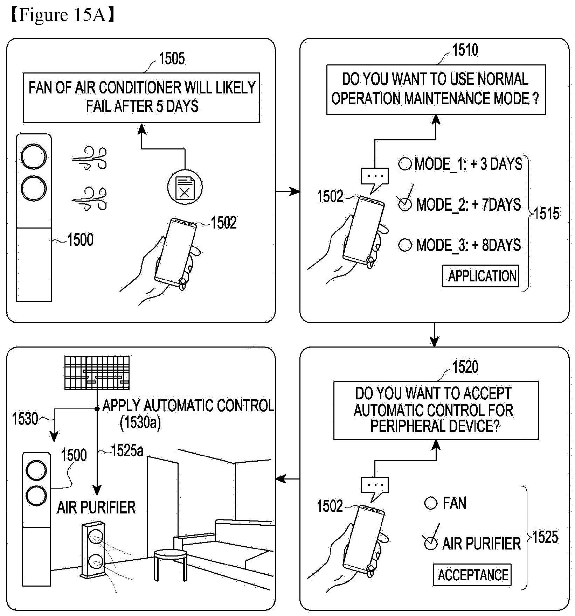

FIG. 15A illustrates a scenario of maintaining the normal operation state of an appliance through use of a peripheral device according to an embodiment.

Referring to FIG. 15A, a user terminal 1502 may receive failure prediction information 1505 indicating a failure which is predicted based on the operation data of an appliance 1500 (e.g., an air conditioner) from a managing server, and display the failure prediction information 1505 as "A fan of an air conditioner will likely fail after 5 days".

The user terminal 1502 may display information 1510 which inquires of a user whether to use a normal operation maintenance mode in order to delay the predicted failure. The user terminal 1502 displays information of one or more normal operation maintenance modes 1515 according to normal operation maintenance information received from a managing server in order to delay the predicted failure, as mode 1: +3 days, mode 2: +7 days, and mode 3: +8 days. In this manner, each normal operation maintenance mode may include information about how long the predicted failure may be delayed.

If user input is received selecting one of the displayed normal operation maintenance modes 1515, such as a normal operation maintenance mode 2 including information for automatic control of at least one specific peripheral device, the user terminal 1502 may display information 1525 of a peripheral device which may be used for replacing or supplementing the appliance 1500. The user terminal 1502 displays a phrase 1520 which inquires whether to accept the automatic control for the peripheral device. In FIG. 15A, the information 1525 of the peripheral device includes [fan; air purifier]. The user terminal 1502 may receive user input which selects at least one peripheral device of which a user desires to accept automatic control based on the information 1525 of the peripheral device.

If user input which accepts automatic control for at least one peripheral device according to whether the information 1525 of the peripheral device is received, the user terminal 1502 transmits a control command 1530a for requesting an operation to a corresponding peripheral device 1525a, enabling the peripheral device 1525a to operate while replacing or supplementing the appliance 1500. For example, if the appliance 1500 is an air conditioner, the peripheral device 1525a may be an air circulator or an air purifier. The user terminal 1502 may transmit a control command 1530 to the appliance 1500 for requesting the operation to stop.

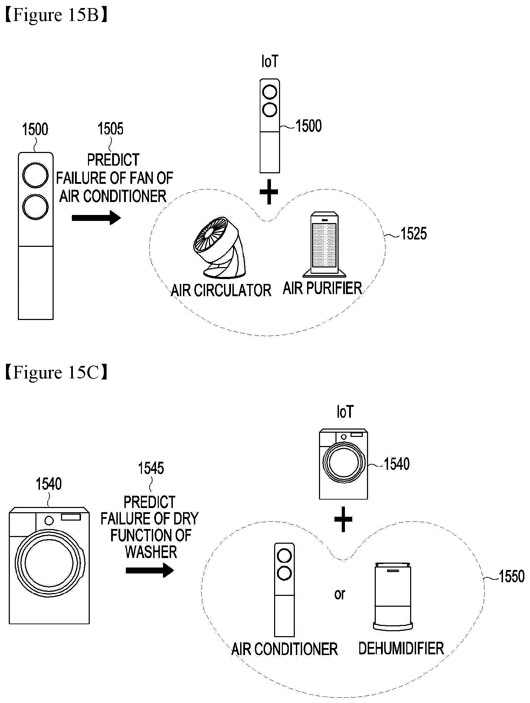

FIG. 15B illustrates an operating scenario when a failure of a fan is predicted (1505) in an air conditioner 1500 according to an embodiment. Referring to FIG. 15B, at least one normal operation maintenance mode provided from a managing server to a user terminal may include information 1525 for automatic control for a peripheral device indicating automatic control for an air circulator and/or an air purifier. The air circulator and/or the air purifier may operate according to a control command from the user terminal to replace or supplement at least part of the functions of the air conditioner 1500.

FIG. 15C illustrates an operating scenario when a failure of a dry function is predicted (1545) in a washer 1540 according to an embodiment. Referring to FIG. 15C, if a failure of a dry function is predicted (1545) in a washer 1540, at least one normal operation maintenance mode provided from a managing server to a user terminal may include information 1550 for automatic control of a peripheral device. In FIG. 15C, the information 1550 for the automatic control of the peripheral device indicates automatic control of an air conditioner and/or a dehumidifier. The air circulator and/or the dehumidifier may operate according to a control command from the user terminal to replace or supplement the dry function of the washer 1540.

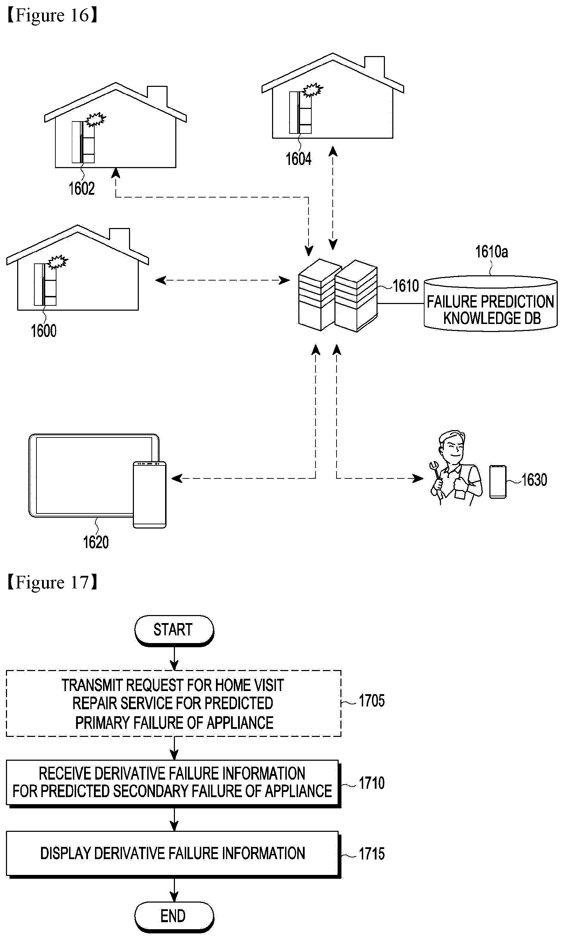

FIG. 16 illustrates a system of providing a repair service for repairing a predicted failure and a derivative failure of an appliance according to an embodiment.

Referring to FIG. 16, a managing server 1610 is configured to communicate with one or more appliances 1600, 1602, and 1604, to predict at least one failure which may occur in the appliances 1600, 1602, and 1604, and to manage a repair service in which an engineer may visit a home where a corresponding appliance is located in order to repair the predicted failure. The managing server 1610 may directly communicate with the appliances 1600, 1602, and 1604, or may communicate with the appliances 1600, 1602, and 1604 through at least one user terminal 1620. A description of a structure of the appliances 1600, 1602, and 1604, the managing server 1610, and the user terminal 1620 may be with reference to FIGS. 2, 3, and 4 which have been described above. The term "user terminal" may be interchangeable with other terms such as mobile station, terminal, user device, and device.

The managing server 1610 may have a failure prediction knowledge DB 1610a which stores information which may be used for predicting a failure of the appliances 1602, 1604, and 1606, predicts a failure which may occur in the appliances 1602, 1604, and 1606 based on the failure prediction knowledge DB 1610a, determines a schedule for a repair service for repairing the failure through a communication with the user terminal 1620, and transmits schedule information for the repair service and information about the predicted failure to an engineer's terminal 1630.

If a primary failure is predicted at the appliance 1602, the managing server 1610 may additionally predict a secondary failure which may be derived from the primary failure. For example, the managing server 1610 stores and manages a failure history and a failure repair history of the plurality of appliances 1602, 1604, and 1606. If the primary failure is predicted at the appliance 1602, the managing server 1610 may additionally predict whether there is a secondary failure (i.e., derivative failure) which is predicted to additionally occur by the primary failure based on the failure history and the failure repair history of the plurality of appliances 1602, 1604, and 1606, which are the same or similar types. If the derivative failure is predicted, the managing server 1610 may fix both the predicted failure and the derivative failure in one repair service.

The user terminal 1620 may receive information about a plurality of predicted failures of an appliance from the managing server 1610, and request to fix the plurality of predicted failures concurrently, i.e., through one repair service, to the managing server 1610 through user input.

Embodiments in which a user terminal communicates with a managing server to request a repair service for fixing a plurality of failures of an appliance concurrentlywill be described below, however, it will be noted that a similar description may be applied to when the appliance, not the user terminal, communicates with the managing server to request the repair service for fixing the plurality of failuresconcurrently.

FIG. 17 illustrates an operation of a user terminal for fixing a plurality of failures of an appliance concurrently according to an embodiment. Referring to FIG. 17, a user terminal transmits, to a managing server, a request signal for a repair service for a primary failure which is predicted for an appliance in step 1705. For example, the user terminal may transmit, to the managing server, a request signal for a repair service which requests to use the repair service before a predicted failure time point of the primary failure as shown in step 715 in FIG. 7.

The user terminal receives, from the managing server, derivative failure information about a derivative failure which is predicted for the appliance in step 1710. The derivative failure information indicates the derivative failure which is determined by the managing server that may be derived due to the primary failure in the appliance, and includes at least one of a failure item, a predicted failure time point, the degree of risk of the derivative failure similar to failure prediction information of the primary failure, and information about the primary failure which derives the derivative failure and at least one recommended treatment scheme related to the primary failure and the derivative failure. The recommended treatment scheme refers to information used for repairing or solving each failure.

The user terminal displays the derivative failure information in step 1715, by displaying at least one of the failure prediction information for the primary failure and schedule information of the repair service.

Although FIG. 17 illustrates an operation of a user terminal for concurrently fixing a plurality of failures of an appliance, various changes could be made to FIG. 17. For example, although shown as a series of operations, various operations in FIG. 17 could overlap, or occur in parallel, in a different order, or multiple times.

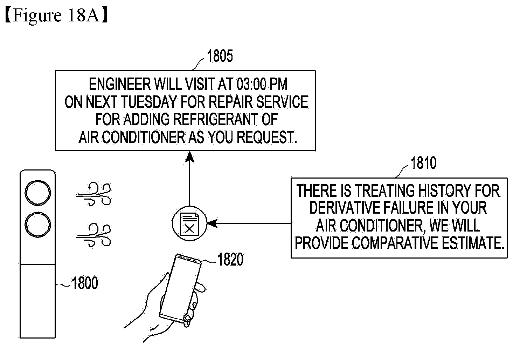

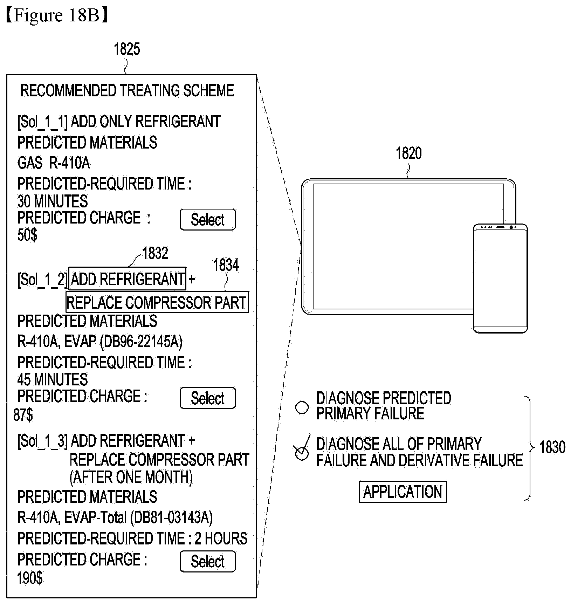

FIGS. 18A and 18B illustrate information about a derivative failure of an appliance displayed on a user terminal according to an embodiment. Referring to FIG. 18A, a user terminal 1820 may display information 1805 related to a repair service received from a managing server after requesting the repair service for a predicted failure (i.e., a primary failure) of an appliance 1800, such as an air conditioner. The information 1805 related to the repair service may include failure prediction information for a primary failure, such as "add refrigerant of air conditioner", and schedule information, such as 03:00 pm, next Tuesday. Additionally, the user terminal 1820 may receive and display derivative failure notification information 1810 which notifies that there is a derivative failure which may be derived due to the primary failure. After displaying the derivative failure notification information 1810, the user terminal 1820 may display derivative failure information 1825 provided from the managing server as shown in FIG. 18B.

Referring to FIG. 18B, a user terminal 1820 may display derivative failure information 1825 provided from a managing server, such as a refrigerant shortage. In FIG. 18B, the derivative failure is compressor failure, and the derivative failure information 1825 includes a plurality of recommended treatment schemes for fixing refrigerant shortage and compressor failure. The first recommended treatment scheme includes only add refrigerant, the predicted-required time is 30 minutes, and the predicted cost is 50 dollars. The second recommended treatment scheme includes add refrigerant 1832 and replace compressor part 1834, the predicted-required time is 45 minutes, and the predicted cost is 87 dollars. The third recommended treatment scheme includes add refrigerant and replace compressor after one month, the predicted-required time is 2 hours, and the predicted cost is 190 dollars.

The user terminal 1820 may display information 1830 which inquires of a user a treatment scheme which a user desires along with the derivative failure information 1825, and which includes a diagnosis of only predicted primary failure and diagnosis of primary failure & derivative failure. Alternatively, the information 1830 which inquires of the user the treatment scheme which the user desires may include the first, the second, and the third recommended treatment schemes provided by the derivative failure information 1825. Alternatively, the user terminal 1820 may receive, from the user, information about a schedule of a repair service in which the primary failure and the derivative failure may be concurrently fixed.

If user input indicating a treatment scheme and/or schedule of a repair service which the user wants is received, the user terminal 1820 may transmit, to the managing server, information about the treatment scheme and/or schedule indicated by the user input.

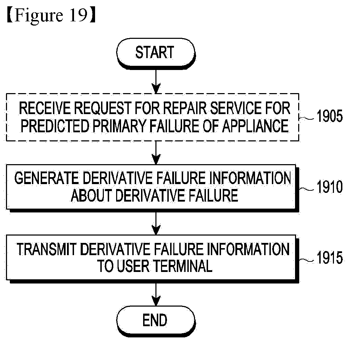

FIG. 19 illustrates an operation of a managing server for fixing a primary failure and a derivative failure of an appliance according to an embodiment. Referring to FIG. 19, a managing server receives, from a user terminal, a request signal for a repair service for a predicted primary failure of an appliance in step 1905, which requests to use the repair service before a predicted failure time point of the primary failure as shown in step 620 in FIG. 6.

The managing server determines whether there is a derivative failure which may be derived from the primary failure, and generates derivative failure information indicating the derivative failure if there is a derivative failure in step 1910. For example, the managing server may search for the derivative failure related to the primary failure from a failure prediction knowledge DB which stores such information as operation data, failure history, the control method for failure delay, failure repair history, manufacture information, environment information, and a customer profile, for a plurality of appliances.

The managing server transmits the derivative failure information to the user terminal in step 1915, including at least one of a failure time, a predicted failure time point, the degree of risk of the derivative failure similar to the failure prediction information of the primary failure, information about the primary failure which derives the derivative failure, and information about at least one recommended treatment scheme related to the primary failure and the derivative failure. The user terminal may select whether to fix the primary failure and the derivative failure concurrently through one repair service by receiving the derivative failure information.

Although FIG. 19 illustrates an operation of a managing server for fixing a primary failure and a derivative failure of an appliance according to an embodiment, various changes could be made to FIG. 19. For example, although shown as a series of operations, various operations in FIG. 19 could overlap, occur in parallel, occur in a different order, or occur multiple times.

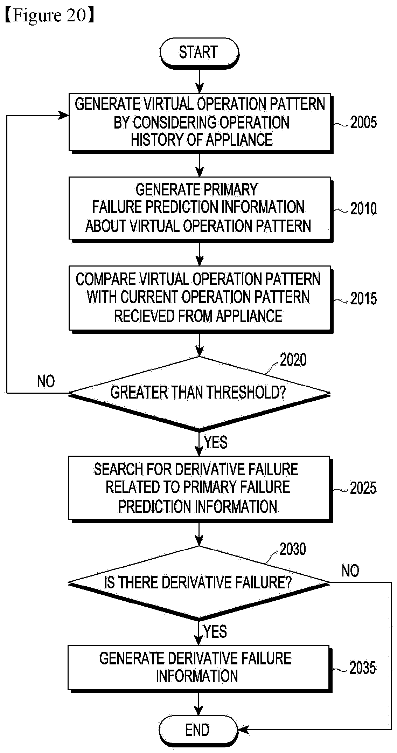

FIG. 20 illustrates an operation of a managing server for generating derivative failure information according to an embodiment. Referring to FIG. 20, a managing server predicts a virtual operation pattern of an appliance by considering an operation history of the appliance in step 2005. For example, the virtual operation pattern may include an operation per time and a control value(s) of an operation parameter(s) for a corresponding operation, and may be generated by considering a user schedule, a schedule set for the appliance, and a past operation history of the appliance.

The managing server generates primary failure prediction information indicating a primary failure according to the generated virtual operation pattern in step 2010. The managing server predicts the primary failure which may occur if the appliance operates according to the generated virtual operation pattern, and generates the primary failure prediction information including an occurrence time point and the degree of risk of the predicted primary failure.

The managing server compares the generated virtual operation pattern with a current operation pattern of the appliance in step 2015. The current operation pattern may include an operation per time according to the actual operation of the appliance and a control value(s) of an operation parameter(s) for a corresponding operation. The managing server determines whether the degree of similarity between the generated virtual operation pattern and the current operation pattern is greater than a threshold value in step 2020. If the degree of similarity is not greater than the threshold value, the managing server determines that the generated virtual operation pattern is not similar to the current operation pattern, and returns to step 2005. If the degree of similarity is greater than the threshold value, the managing server determines that the generated virtual operation pattern is similar to the current operation pattern, and proceeds to step 2025, in which the managing server searches for a derivative failure related to the primary failure prediction information.

Specifically, the managing server may search for the derivative failure in a failure prediction knowledge DB which stores operation data, failure history, the control method for failure delay, failure repair history, manufacture information, environment information, and a customer profile for a plurality of appliances in step 2025. For example, the managing server may search for the derivative failure related to the primary failure prediction information based on the failure history and the failure repair history for a plurality of appliances which are the same type as or similar to the appliance related to the primary failure prediction information. The managing server may search for whether there is a secondary failure which occurs within a predetermined threshold duration from a time point at which the primary failure occurs indicated by the primary failure prediction information in the plurality of appliances which are the same or similar types. If the number of times the secondary failure occurs during the threshold duration after occurrence of the primary failure is greater than a predetermined threshold value in the plurality of appliances, the secondary failure is determined as a derivative failure for the primary failure.

The managing server determines whether there is a derivative failure related to the primary failure indicated by the primary failure prediction information in step 2030. If there is no derivative failure, the managing server terminates the operation. If there is a derivative failure, the managing server may generate derivative failure information including a failure item, a predicted failure time point, and the degree of risk for the derivative failure in step 2035. The derivative failure information may be transmitted from the managing server to a corresponding appliance or a user terminal.

Although FIG. 20 illustrates an operation of a managing server for generating derivative failure information according to an embodiment, various changes could be made to FIG. 20. For example, although shown as a series of operations, various operations in FIG. 20 could overlap, or occur in parallel, in a different order, or multiple times.

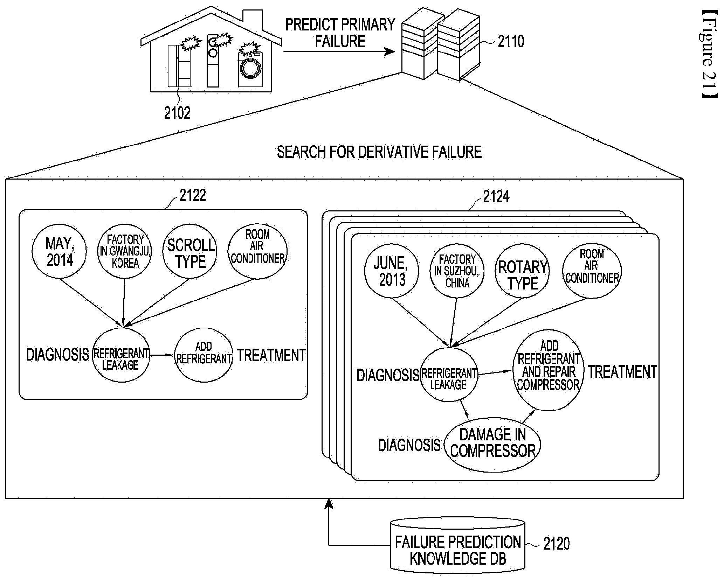

FIG. 21 illustrates an operation of a managing server for searching for a derivative failure of an appliance according to an embodiment. Referring to FIG. 21, a managing server 2110 predicts a primary failure of an appliance 2102 and searches for a derivative failure from a failure prediction knowledge DB 2120 which stores failure prediction knowledge information 2122 for the appliance 2102. The failure prediction knowledge information 2122 includes at least one of operation data, operation history, the control method for failure delay, failure repair history, manufacture information, environment information, and customer profile information related to the appliance 2102. In FIG. 21, the failure prediction knowledge information 2122 for the appliance 2102 includes manufacture date: May, 2014, manufacture factory: factory in Gwangju, Korea, operation type: scroll type, installation type: room air conditioner, failure history (i.e., diagnosis): refrigerant leakage, failure repair history: add refrigerant.

The failure prediction knowledge DB 2120 includes failure prediction knowledge information 2124 for a plurality of appliances which are the same type as or a similar type to the appliance 2102. The failure prediction knowledge information 2124 includes manufacture date: June, 2013, manufacture factory: factory in Suzhou, China, operation type: rotary type, installation type: room air conditioner, failure history 1 (i.e., diagnosis): refrigerant leakage, failure history 2 (i.e., diagnosis): compressor damage, failure repair history: add refrigerant and repair compressor.

The managing server 2110 predicts refrigerant leakage as the primary failure of the appliance 2102, and searches for another failure related to the refrigerant leakage from the failure prediction knowledge information 2124 for the plurality of appliances. If compressor damage as the secondary failure related to the refrigerant leakage is searched, the managing server 2110 determines that there is compressor damage as the secondary failure related to the refrigerant leakage of the appliance 2102. For example, if difference between a time point at which refrigerant leakage occurs in the plurality of appliances and a time point at which compressor damage occurs is within a predetermined threshold duration, and/or the number of times compressor damage occurs after refrigerant leakage occurs is greater than a predetermined threshold count, the managing server 2110 may determine the compressor damage as a derivative failure.

As described in embodiments, an additional future failure which may be derived in an appliance of which a failure is predicted and the failure are repaired concurrently through one repair service, thereby minimizing a user inconvenience due to an unnecessary additional repair service and maintaining a normal operation state of the appliance.

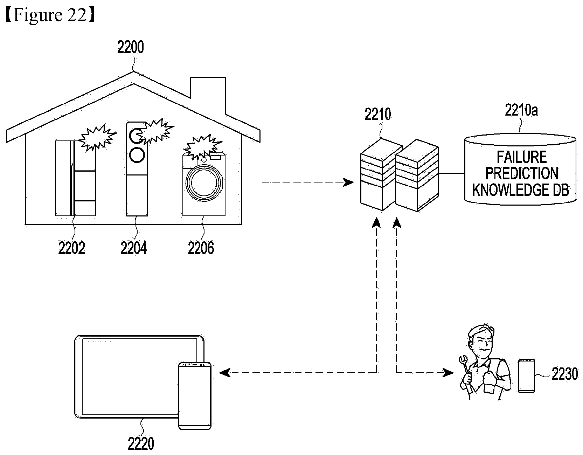

FIG. 22 illustrates a system for providing a repair service for repairing a predicted failure of an appliance and a failure of another appliance according to an embodiment. Referring to FIG. 22, a managing server 2210 is configured to communicate with one or more appliances 2200, 2202, and 2204 within the same home 2200 (or the same office), predict at least one failure which may occur in the appliances 2200, 2202, and 2204, and manage a repair service in which an engineer may visit a home where a corresponding appliance is located in order to repair the predicted failure. The managing server 2210 may directly communicate with the appliances 2200, 2202, and 2204, or may communicate with the appliances 2200, 2202, and 2204 through at least one user terminal 2220. A description of a structure of the appliances 2200, 2202, and 2204, the managing server 2210, and the user terminal 2220 may be with reference to FIGS. 2, 3, and 4 which have been described above.

The managing server 2210 may have a failure prediction knowledge DB 2210a which stores information which may be used for predicting a failure of appliances 2202, 2204, and 2206, and predicts a failure which may occur in the appliances 2202, 2204, and 2206 based on the failure prediction knowledge DB 2210a, determines a schedule of a repair service for repairing the failure through a communication with the user terminal 2220, and transmits schedule information for the repair service and information about the predicted failure to an engineer's terminal 2230.

If the first failure is predicted in the first appliance 2202 in the home 2200, the managing server 2210 may additionally predict the second failure which may occur in the second appliance 2204 within the same home 2200. For example, a failure prediction knowledge DB 2210a of the managing server 2210 stores and manages operation data, failure history, the control method for failure delay, failure repair history, manufacture information, environment information, and customer profile information of the plurality of appliances 2202, 2204, and 2206, and the environment information or the customer profile information may include an address of a home or an office where the plurality of appliances 2202, 2204, and 2206 are installed. If the first failure is predicted in the first appliance 2202, the managing server 2210 may additionally predict whether there is the second failure which may occur in the appliances 2204 and 2206 based on a failure history and a failure repair history of the appliances 2204 and 2206 which are located on the same premises and which are the same or similar type. The same premises space may denote, for example, a space which is identified with the same address such as a home or an office. If the second failure is predicted, the managing server 2210 may fix the first failure of the first appliance 2202 and the second failure of the second appliance 2205 or 2206 concurrently through one repair service.

The user terminal 2220 may receive information about a plurality of predicted failures of the first and the second appliances from the managing server 2210, and request to fix the plurality of predicted failures concurrently through one repair service to the managing server 2210 through user input.

Embodiments in which a user terminal communicates with a managing server to request a repair service for fixing a plurality of failures of appliances concurrently will be described below. However, it will be noted that a similar description may be applied to when an arbitrary appliance, not the user terminal, communicates with the managing server to request the repair service for fixing the plurality of failures.

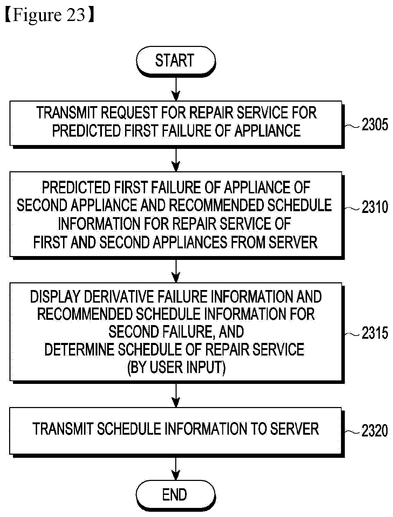

FIG. 23 illustrates an operation of a user terminal for fixing a plurality of predicted failures of a plurality of appliances concurrently according to an embodiment. Referring to FIG. 23, a user terminal transmits, to a managing server, a request signal for a repair service for the first failure which is predicted for the first appliance in step 2305. For example, the user terminal may transmit, to the managing server, the request signal for the repair service for requesting to use the repair service before a predicted failure time point of the first failure as described in step 715 in FIG. 7.

The user terminal receives, from the managing server, failure prediction information for the second failure which is predicted for the second appliance and recommended schedule information indicating a recommended schedule of a repair service for fixing the first and the second appliances concurrently in step 2310. The failure prediction information may include at least one of a failure item, a predicted failure time point, and the degree of risk of the second failure. The recommended schedule information indicates a schedule of a repair service which may fix the first failure of the first appliance and the second failure of the second appliance concurrently.

The user terminal displays derivative failure information and recommended schedule information for the second failure and determines a new schedule of the repair service for fixing the first and the second failures concurrently in step 2315. The user terminal transmits information about the determined new schedule to the managing server in step 2320.

Although FIG. 23 illustrates an operation of a user terminal for fixing a plurality of predicted failures of a plurality of appliances concurrently according to an embodiment, various changes could be made to FIG. 23. For example, although shown as a series of operations, various operations in FIG. 23 could overlap, or occur in parallel, in a different order, or multiple times.

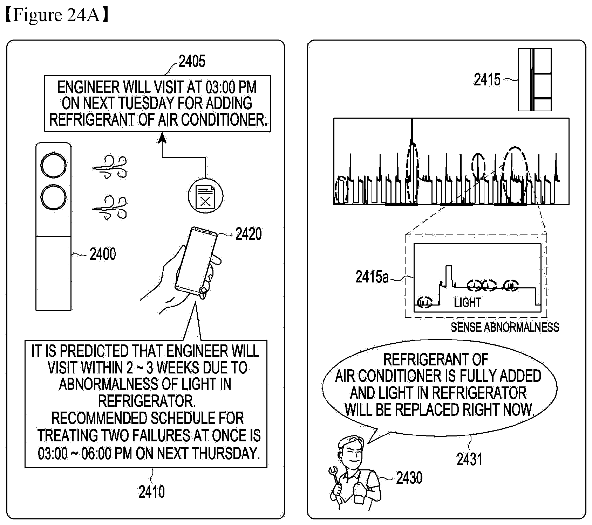

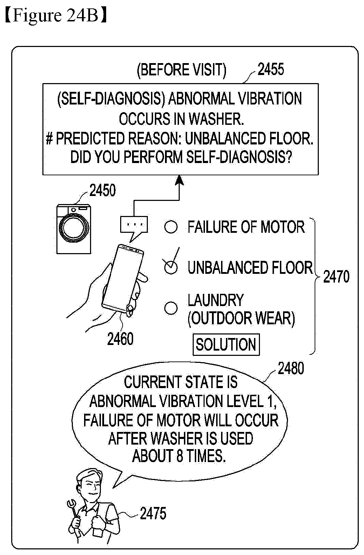

FIGS. 24A and 24B illustrate information about a plurality of failures of a plurality of appliances displayed on a user terminal according to an embodiment. Referring to FIG. 24A, a user terminal 2420 may display information 2405 related to a repair service for a predicted failure (i.e., the first failure) of the first appliance 2400, such as an air conditioner received from a managing server after requesting the repair service. The information 2405 related to the repair service may include failure prediction information for the first failure, such as add refrigerant of an air conditioner, and schedule information, such as 03:00 pm on next Tuesday. The user terminal 2420 may receive, from the managing server, information 2410 related to the second failure predicted for a refrigerator as the second appliance 2415 within the same home, and display the information 2410. The information 2410 related to the second failure may include failure prediction information for the second failure, such as light of refrigerator is abnormal, and recommended schedule information, such as 03:00 - 06:00 pm on next Thursday.

The user terminal 2420 may determine a schedule of a repair service for fixing the first and the second failures concurrently through user input by considering the recommended schedule information within the information 2410 related to the second failure. Failure prediction information for the second failure is generated by the managing server by monitoring operation data gathered for the refrigerator 2415, such as a power pattern 2415a. For example, the managing server may predict a failure for at least one another appliance which is located within the same home as the first appliance 2400 and determine the second failure of the second appliance which may be fixed along with the first failure of the first appliance 2400.

The information 2410 related to the second failure may be transmitted from the managing server to an engineer 2430 in charge of a repair service. The engineer 2430 may fix the first failure of the first appliance and the second failure of the second appliance through one repair service using failure prediction information for the first failure which has already been provided and the information 2410 related to the second failure. Further, the engineer 2430 may send a message 2431 after fix the first failure of the first appliance and the second failure of the second appliance.

Referring to FIG. 24B, a user terminal 2460 may display information 2455 related to a repair service for a predicted failure of an appliance 2450, such as a washer received from a managing server after requesting the repair service. The information 2455 related to the repair service may include self-diagnosis contents for the predicted failure, for example, that abnormal vibration occurs and a predicted reason is unbalanced floor, and a message requesting to check whether to perform self-diagnosis for the self-diagnosis contents. The user terminal 2460 may input a predicted reason by considering the information 2455 related to the predicted failure.

Further, the information 2455 related to the predicted failure and the predicted reason may be transmitted to an engineer 2475 in charge of a repair service. The engineer 2475 may transmit a message 2480 indicating a solution for the failure of the appliance using the information 2455 related to the predicted failure and the predicted reason.

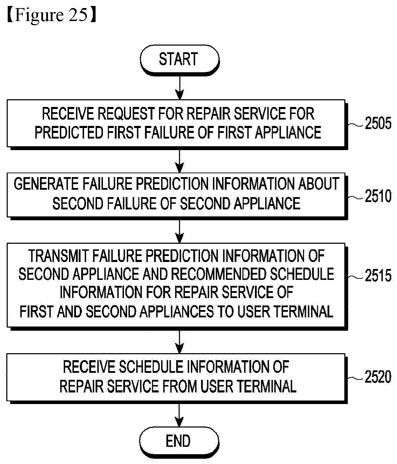

FIG. 25 illustrates an operation of a managing server for fixing failures of a plurality of appliances according to an embodiment. Referring to FIG. 25, a managing server receives, from a user terminal, a request signal for a repair service for a predicted first failure of the first appliance in step 2505, which requests to use the repair service before a predicted failure time point of the first failure as shown in step 620 in FIG. 6.

The managing server predicts the second failure of the second appliance based on a failure history and a failure repair history of appliances which are located on the same premises as the first appliance by using an address of a home or an office where the first appliance is installed, and generates failure prediction information for the second failure in step 2510. In examples, the managing server may generate the failure prediction information for the second failure if the difference between the predicted failure time point of the first failure and a predicted failure time point of the second failure is less than a predetermined threshold value. The managing server may generate the failure prediction information for the second failure if the second failure of the second appliance is predicted and the difference between a time point at which the warranty duration of the second appliance expires and a schedule of a repair service for repairing the first failure is less than a predetermined threshold value.

The managing server transmits, to a user terminal, the failure prediction information for the second failure and recommended schedule information indicating a recommended schedule of a repair service for fixing the first failure and the second failure concurrently in step 2515. The failure prediction information may include at least one of a failure item, a predicted failure time point, and the degree of risk of the second failure. The recommended schedule information indicates a schedule of a repair service which may fix the first failure of the first appliance and the second failure of the second appliance concurrently.

The managing server may receive, from the user terminal, information about a new schedule of the repair service for fixing the first failure and the second failure concurrently in step 2520, and may transmit, to an engineer in charge of the repair server, the information about the new schedule of the repair service and failure prediction information for the first failure and the second failure. The managing server may provide the engineer with information about a method which may be used for fixing (i.e., repairing) the first failure and the second failure.

Although FIG. 25 illustrates an operation of a managing server for fixing failures of a plurality of appliances according to an embodiment, various changes could be made to FIG. 25. For example, although shown as a series of operations, various operations in FIG. 25 could overlap, or occur in parallel, in a different order, or multiple times.

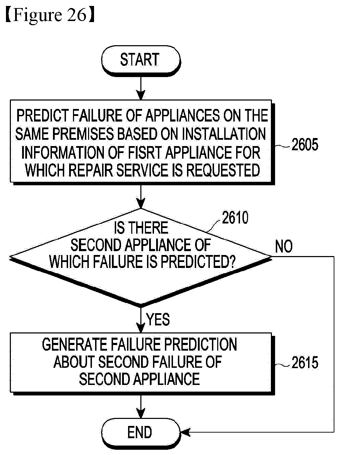

FIG. 26 illustrates an operation of a managing server for generating failure prediction information of the second failure according to an embodiment. Referring to FIG. 26, a managing server searches for a failure prediction knowledge DB of appliances which are located on the same premises by considering environment information or customer profile information of the first appliance for which a repair service is requested to predict failure of the appliances in step 2605. The managing server determines whether there is a second appliance which has a predicted second failure which may be fixed through the repair service in step 2610, by considering a predicted failure time point of the first failure, a predicted failure time point of the second failure, a warranty of the second appliance, and a schedule of the repair service.

The managing server generates failure prediction information indicating the second failure of the second appliance in step 2615. The managing server may generate recommended schedule information of a repair service for fixing the first failure and the second failure concurrently, such as by considering an engineer's schedule. The failure prediction information and the recommended schedule information of the second failure may be transmitted from the managing server to a corresponding appliance or user terminal.

Although FIG. 26 illustrates an operation of a managing server for generating failure prediction information of the second failure according to an embodiment, various changes could be made to FIG. 26. For example, although shown as a series of operations, various operations in FIG. 26 could overlap, or occur in parallel, in a different order, or multiple times.

According to embodiments, a method for controlling an appliance based on failure prediction includes receiving, from a managing server, failure prediction information indicating a predicted failure of the appliance, determining a service available schedule indicating a time point at which a repair service for repairing the predicted failure is available based on the failure prediction information according to user input, transmitting, to the managing server, a request signal for normal operation maintenance information used to delay the predicted failure and maintain the normal operation of the appliance if the determined service available schedule is after a predicted failure time point indicated by the failure prediction information, receiving, from the managing server, the normal operation maintenance information, and controlling the appliance to operate according to the normal operation maintenance information.

The method further includes inputting, from a user, a user preference criterion including at least one of performance and a duration for which a failure is capable of being delayed, which are provided in a normal operation maintenance mode indicated by the normal operation maintenance information, before transmitting, to the managing server, the request signal for the normal operation maintenance information, wherein the request signal for the normal operation maintenance information includes information related to the user preference criterion.

The normal operation maintenance information includes an operation pattern indicating an operation per time and a control value of an operation parameter for each operation of the appliance, information of at least one replacement part or replacement device to be used for replacing or supplementing the appliance for delaying the predicted failure of the appliance, and/or normal operation time information indicating a predicted time duration for which the normal operation of the appliance is possible if the operation pattern or the at least one replacement part or replacement device is used.

The method further includes transmitting, to the managing server, a request signal for the repair service if the determined service available schedule is before the predicted failure time point indicated by the failure prediction information, receiving, from the managing server, derivative failure information indicating a derivative failure which is predicted to additionally occur in the appliance in connection with the predicted failure, and displaying the derivative failure information.

The derivative failure is predicted by the managing server based on operation data gathered from a plurality of appliances which are the same type as or a similar type to the type of the appliance and a failure history of the plurality of appliances.

The derivative failure information is generated by the managing server based on the predicted failure time point of the predicted failure, a predicted failure time point of the derivative failure, and/or a number of times the derivative failure occurs in a plurality of appliances which are the same type as or a similar type to a type of the appliance.

The method further includes transmitting, to the managing server, a request signal for the repair service if the determined service available schedule is before the predicted failure time point indicated by the prediction information, receiving, from the managing server, first failure prediction information indicating a second failure which is predicted to occur in a second appliance which is located on the same premises as the appliance and recommended schedule information indicating a recommended schedule of a repair service for repairing the predicted failure and the second failure concurrently, and displaying the first failure prediction information and the recommended schedule information.

According to embodiments, a method for controlling an appliance based on failure prediction by a user terminal includes receiving, from a managing server, failure prediction information indicating a predicted failure of the appliance, determining a service available schedule indicating a time point at which a repair service for repairing the predicted failure is available based on the failure prediction information according to user input, transmitting, to the managing server, a request signal for normal operation maintenance information used to delay the predicted failure and maintain the normal operation of the appliance if the determined service available schedule is after a predicted failure time point indicated by the failure prediction information, receiving, from the managing server, the normal operation maintenance information, and transmitting, to the appliance, the normal operation maintenance information.

The normal operation maintenance information includes an operation pattern indicating an operation per time and a control value of an operation parameter for each operation of the appliance, information of at least one replacement part or replacement device to be used for replacing or supplementing the appliance for delaying the predicted failure of the appliance, and/or normal operation time information indicating a predicted time duration for which thenormal operation of the appliance is possible if the operation pattern or the at least one replacement part or replacement device is used.

The method further includes transmitting, to the managing server, a request signal for the repair service if the determined service available schedule is before the predicted failure time point indicated by the failure prediction information, receiving, from the managing server, derivative failure information indicating a derivative failure which is predicted to additionally occur in the appliance in connection with the predicted failure, and displaying the derivative failure information.

The derivative failure is predicted by the managing server based on operation data gathered from a plurality of appliances which are the same type as or a similar type to the type of the appliance and a failure history of the plurality of appliances.

The derivative failure information is generated by the managing server based on the predicted failure time point of the predicted failure, a predicted failure time point of the derivative failure, and/or a number of times the derivative failure occurs in a plurality of appliances which are the same type as or a similar type to the type of the appliance.

The method further includes transmitting, to the managing server, a request signal for the repair service if the determined service available schedule is before the predicted failure time point indicated by the prediction information, receiving, from the managing server, first failure prediction information indicating a second failure which is predicted to occur in a second appliance which is located on the same premises as the appliance and recommended schedule information indicating a recommended schedule of a repair service for repairing the predicted failure and the second failure concurrently, and displaying the first failure prediction information and the recommended schedule information.

According to embodiments, an apparatus of an appliance controlled based on failure prediction includes a native function executing unit, a communication unit configured to receive, from a managing server, failure prediction information indicating a predicted failure of the appliance, to transmit, to the managing server, a request signal for normal operation maintenance information, and to receive, from the managing server, the normal operation maintenance information, and a controller configured to determine a service available schedule indicating a time point at which a repair service for repairing the predicted failure is available based on the failure prediction information according to user input, to generate the request signal for the normal operation maintenance information used to delay the predicted failure and maintain the normal operation of the appliance if the determined service available schedule is after a predicted failure time point indicated by the failure prediction information, and to control the native function executing unit to operate according to the normal operation maintenance information.

The request signal for the normal operation maintenance information further includes information about a user preference criterion indicating at least one of performance and a duration for which a failure is capable of being delayed, which are provided in a normal operation maintenance mode indicated by the normal operation maintenance information.

The normal operation maintenance information includes an operation pattern indicating an operation per time and a control value of an operation parameter for each operation of the appliance, information of at least one replacement part or replacement device to be used for replacing or supplementing the appliance for delaying the predicted failure of the appliance, and/or normal operation time information indicating a predicted time duration for which the normal operation of the appliance is possible if the operation pattern or the at least one replacement part or replacement device is used.

The controller is configured to transmit, to the managing server, a request signal for the repair service through the communication unit if the determined service available schedule is before the predicted failure time point indicated by the failure prediction information, to receive, from the managing server, derivative failure information indicating a derivative failure which is predicted to additionally occur in the appliance in connection with the predicted failure through the communication unit, and to display the derivative failure information.

The derivative failure is predicted by the managing server based on operation data gathered from a plurality of appliances which are the same type as or a similar type to the type of the appliance and a failure history of the plurality of appliances.

The derivative failure information is generated by the managing server based on the predicted failure time point of the predicted failure, a predicted failure time point of the derivative failure, and/or a number of times the derivative failure occurs in a plurality of appliances which are the same type as or a similar type to the type of the appliance.

The controller is configured to transmit, to the managing server, a request signal for the repair service through the communication unit if the determined service available schedule is before the predicted failure time point indicated by the prediction information, to receive, from the managing server, first failure prediction information indicating a second failure which is predicted to occur in a second appliance which is located on the same premises as the appliance and recommended schedule information indicating a recommended schedule of a repair service for repairing the predicted failure and the second failure concurrently through the communication unit, and to display the first failure prediction information and the recommended schedule information.

According to embodiments, an apparatus of a user terminal for controlling an appliance based on failure prediction includes a communication unit configured to receive, from a managing server, failure prediction information indicating a predicted failure of the appliance, to transmit, to the managing server, a request signal for normal operation maintenance information, to receive, from the managing server, the normal operation maintenance information, and to transmit, to the appliance, the normal operation maintenance information, and a controller configured to determine a service available schedule indicating a time point at which a repair service for repairing the predicted failure is available based on the failure prediction information according to user input, and to generate the request signal for the normal operation maintenance information used to delay the predicted failure and maintain the normal operation of the appliance if the determined service available schedule is after a predicted failure time point indicated by the failure prediction information.

The normal operation maintenance information includes an operation pattern indicating an operation per time and a control value of an operation parameter for each operation of the appliance, information of at least one replacement part or replacement device to be used for replacing or supplementing the appliance for delaying the predicted failure of the appliance, and/or normal operation time information indicating a predicted time duration for which the normal operation of the appliance is possible if the operation pattern or the at least one replacement part or replacement device is used.

The controller is configured to transmit, to the managing server, a request signal for the repair service through the communication unit if the determined service available schedule is before the predicted failure time point indicated by the failure prediction information, to receive, from the managing server, derivative failure information indicating a derivative failure which is predicted to additionally occur in the appliance in connection with the predicted failure through the communication unit, and to display the derivative failure information.

The derivative failure is predicted by the managing server based on operation data gathered from a plurality of appliances which are the same type as or a similar type to the type of the appliance and a failure history of the plurality of appliances.

The derivative failure information is generated by the managing server based on the predicted failure time point of the predicted failure, a predicted failure time point of the derivative failure, and/or a number of times the derivative failure occurs in a plurality of appliances which are the same type as or a similar type to the type of the appliance.

The controller is configured to transmit, to the managing server, a request signal for the repair service through the communication unit if the determined service available schedule is before the predicted failure time point indicated by the prediction information, to receive, from the managing server, first failure prediction information indicating a second failure which is predicted to occur in a second appliance which is located on the same premises as the appliance and recommended schedule information indicating a recommended schedule of a repair service for repairing the predicted failure and the second failure concurrently through the communication unit, and to display the first failure prediction information and the recommended schedule information.

As described above, a plurality of predicted failures of a plurality of appliances which are located on the same premises, such as a home or an office, are repaired concurrently through one repair service, which reduces a user's inconvenience due to an unnecessary additional repair service and maintains a normal operation state of the appliance.

Embodiments may be implemented as computer readable code in a computer readable recording medium in a specific perspective. The computer readable recording medium is a data storage device that may store data readable by a computer system, such as read only memories (ROMs), random access memories (RAMs), CD-ROMs, magnetic tapes, floppy disks, optical data storage devices, and data transmission over the Internet. The computer readable recording medium may be distributed by computer systems over a network, and accordingly, the computer readable codes may be stored and executed in a distributed manner. Functional programs, codes, and code segments to attain embodiments may be readily interpreted by skilled programmers in the art to which the disclosure pertains.

The apparatuses and methods according to embodiments may be implemented in hardware, software, or a combination of hardware and software. Such software may be stored in a volatile or non-volatile storage device such as a ROM or other storage devices, a memory, such as RAM, a memory chip, a device or an integrated circuit, or a storage medium, such as a compact disc (CD), digital video disc (DVD), magnetic disk, or magnetic tape, which enables optical or magnetic recording while simultaneously read out by a machine (e.g., a computer). The methods according to embodiments may be implemented by a computer or a portable terminal including a controller and a memory, and the memory may be a machine-readable storage medium that may properly retain program(s) containing instructions for implementing the embodiments.

Accordingly, the disclosure encompasses a program containing codes for implementing the device or method set forth in the claims of this disclosure and a machine (e.g., computer)-readable storage medium storing the program. The program may be electronically transferred via any media such as communication signals transmitted through a wired or wireless connection and the disclosure includes the equivalents thereof.

The apparatuses according to embodiments may receive the program from a program providing device wiredly or wirelessly connected thereto and store the program. The program providing apparatus may include a memory for storing a program including instructions enabling a program processing apparatus to perform a method according to an embodiment and data necessary for a method according to an embodiment, a communication unit for performing wired or wireless communication with a graphic processing apparatus, and a controller transmitting the program to the graphic processing apparatus automatically or as requested by the graphic processing apparatus.

A method according to embodiments may be provided in a computer program product, which may include software (S/W) programs or computer-readable storage media storing the S/W programs or products traded between the seller and the buyer. For example, the computer program products may include S/W program-type products (e.g., downloadable applications (apps)) that are electronically distributed through the device 10 or the manufacturer of the device 10 or electronic market. For electronic distribution, at least part of the S/W programs may be stored in storage media or temporarily generated. In this case, the storage media may be storage media of the manufacturer's or electronic market's server or the relay server.

While the present disclosure has been shown and described with reference to embodiments thereof, it will be understood by those skilled in the art that various changes in form and details may be made therein without departing from the scope of the present disclosure as defined by the appended claims.

## Claims

1. A method for operating an appliance (102, 104, 106), comprising:
receiving, by the appliance, prediction information indicating a predicted failure of the appliance (102, 104, 106);
receiving, by the appliance, a schedule of availability of a repair service for repairing the predicted failure of the appliance;
transmitting, by the appliance, a signal for requesting maintenance information for use in delaying the predicted failure and maintaining a normal operation of the appliance (102, 104, 106) if a time point of availability of the repair service, determined from the received schedule, is after a predicted failure time point indicated by the prediction information;
receiving, by the appliance, the maintenance information;
operating, by the appliance, based on the maintenance information to delay the predicted failure; and
transmitting, by the appliance, a request signal for requesting the repair service if the time point of availability of the repair service, determined from the received schedule, is before the predicted failure time point indicated by the prediction information.

2. The method of claim 1, further comprising:
receiving a criterion including at least one of: performance which is capable of being provided in a maintenance mode; and a duration for which the predicted failure is capable of being delayed before transmitting the signal,
wherein the signal includes information related to the criterion.

3. The method of claim 1, further comprising:
receiving derivative information indicating a derivative failure which is predicted to additionally occur in the appliance (102, 104, 106) in connection with the predicted failure; and
displaying the derivative information.

4. The method of claim 1, further comprising:
receiving additional prediction information indicating an additional failure which is predicted to occur in an additional appliance (102, 104, 106) which is located on a same premises as the appliance (102, 104, 106) and recommended schedule information indicating a recommended schedule of a repair service for repairing the predicted failure and the additional failure concurrently; and
displaying the additional prediction information and the recommended schedule information.

5. A method for operating a user terminal (120), comprising:
receiving, by the user terminal, prediction information indicating a predicted failure of an appliance (102, 104, 106);
receiving, by the user terminal, a schedule of availability of a repair service for repairing the predicted failure of the user terminal;
transmitting, by the user terminal, a signal for requesting maintenance information used to delay the predicted failure and maintain a normal operation of the appliance (102, 104, 106) if a time point of availability of the repair service, determined from the received schedule, is after a predicted failure time point indicated by the prediction information;
receiving, by the user terminal, the maintenance information;
transmitting, by the user terminal, the maintenance information to the appliance (102, 104, 106); and
transmitting a request signal for requesting the repair service if the received schedule is before the predicted failure time point indicated by the prediction information.

6. The method of claim 1 or the method of claim 5, wherein the maintenance information includes at least one of an operation pattern indicating an operation per time and a control value of an operation parameter for each operation of the appliance, information of at least one replacement part or replacement device to be used to replace or supplement the appliance (102, 104, 106) for delaying the predicted failure of the appliance, and time information indicating a predicted time duration for which a normal operation of the appliance is possible if the operation pattern or the at least one replacement part or replacement device is used.

7. The method of claim 5, further comprising:
receiving derivative information indicating a derivative failure which is predicted to additionally occur in the appliance (102, 104, 106) in connection with the predicted failure; and
displaying the derivative information.

8. The method of claim 7, wherein the derivative failure is predicted based on operation data gathered from a plurality of appliances which are the same type as or are similar types to the appliance (102, 104, 106) and a failure history of the plurality of appliances.

9. The method of claim 5, further comprising:
receiving additional prediction information indicating an additional failure which is predicted to occur in an additional appliance (102, 104, 106) which is located on a same premises as the appliance (102, 104, 106) and recommended schedule information indicating a recommended schedule of a repair service for repairing the predicted failure and the additional failure concurrently; and
displaying the additional prediction information and the recommended schedule information.

10. An appliance (102, 104, 106), comprising:
an executing unit (210);
a communication unit (230) configured to receive prediction information indicating a predicted failure of the appliance, to transmit a signal for requesting maintenance information for use in delaying the predicted failure and maintaining a normal operation of the appliance, and to receive the maintenance information; and
a controller (220) configured to receive a schedule of availability of a repair service for repairing the predicted failure of the appliance, to generate the signal if a time point of availability of the repair service, determined from the received schedule, is after a predicted failure time point indicated by the prediction information, to control the executing unit (210) to operate based on the maintenance information, and transmit a request signal for requesting the repair service if the received schedule is before the predicted failure time point indicated by the prediction information.

11. The appliance (102, 104, 106) of claim 10, wherein the signal includes information related to a criterion indicating at least one of: performance which is capable of being provided in a maintenance mode; and a duration for which the predicted failure is capable of being delayed.

12. The appliance (102, 104, 106) of claim 10, wherein the maintenance information includes at least one of an operation pattern indicating an operation per time and a control value of an operation parameter for each operation of the appliance (102, 104, 106), information of at least one replacement part or replacement device to be used to replace or supplement the appliance for delaying the predicted failure of the appliance, and time information indicating a predicted time duration for which a normal operation of the appliance is possible if the operation pattern or the at least one replacement part or replacement device is used.

13. The appliance (102, 104, 106) of claim 10, wherein the controller (220) is further configured to control the communication unit (230) to control the communication unit (230 to receive derivative information indicating a derivative failure which is predicted to additionally occur in the appliance (102, 104, 106) in connection with the predicted failure, and to display the derivative information.

14. The appliance (102, 104, 106) of claim 10, wherein the controller (220) is further configured to control the communication unit (230) to control the communication unit (230) to receive additional prediction information indicating an additional failure which is predicted to occur in an additional appliance (102, 104, 106) which is located on a same premises as the appliance (102, 104, 106) and recommended schedule information indicating a recommended schedule of a repair service for repairing the predicted failure and the additional failure concurrently, and to display the additional prediction information and the recommended schedule information.

15. A user terminal (120) configured to perform one of the methods of claims 5 to 9.

## Patentansprüche

1. Verfahren zum Betreiben eines Haushaltsgeräts (102, 104, 106), umfassend:
Empfangen von Vorhersageinformationen durch das Haushaltsgerät, die einen voraussichtlichen Ausfall der Haushaltsgeräts (102, 104, 106) anzeigen;
Empfangen eines Zeitplans für die Verfügbarkeit eines Reparaturdienstes zur Behebung des voraussichtlichen Ausfalls des Haushaltsgeräts durch das Haushaltsgerät;
Übertragen, durch das Haushaltsgerät, eines Signals zur Anforderung von Wartungsinformationen zur Verwendung bei der Verzögerung des voraussichtlichen Ausfalls und Aufrechterhalten eines normalen Betriebs des Haushaltsgeräts (102, 104, 106), wenn ein Zeitpunkt der Verfügbarkeit des Reparaturdienstes, bestimmt aus dem empfangenen Zeitplan, nach einem voraussichtlichen Ausfallzeitpunkt liegt, der durch die Vorhersageinformationen angegeben wird;
Empfangen der Wartungsinformationen durch das Haushaltsgerät;
Betreiben des Haushaltsgeräts basierend auf den Wartungsinformationen, um den voraussichtlichen Ausfall zu verzögern; und
Übertragen eines Anforderungssignals zur Anforderung des Reparaturdienstes durch das Haushaltsgerät, falls der Zeitpunkt der Verfügbarkeit des Reparaturdienstes, der aus dem empfangenen Zeitplan bestimmt wird, vor dem voraussichtlichen Ausfallzeitpunkt liegt, der durch die Vorhersageinformation angegeben wird.

2. Verfahren nach Anspruch 1, ferner umfassend:
Empfangen eines Kriteriums, das mindestens eines von Folgendem umfasst: einer Leistung, die in einem Wartungsmodus erbracht werden kann; und einer Dauer, um die der voraussichtliche Ausfall vor dem Übertragen des Signals verzögert werden kann,
wobei das Signal Informationen bezüglich des Kriteriums umfasst.

3. Verfahren nach Anspruch 1, ferner umfassend:
Empfangen von abgeleiteten Informationen, die einen abgeleiteten Ausfall anzeigen, der in Verbindung mit dem voraussichtlichen Ausfall zusätzlich in dem Haushaltsgerät (102, 104, 106) auftreten soll; und
Anzeigen der abgeleiteten Informationen.

4. Verfahren nach Anspruch 1, ferner umfassend:
Empfangen zusätzlicher Vorhersageinformationen, die einen zusätzlichen Ausfall anzeigen, der für ein zusätzliches Haushaltsgerät (102, 104, 106) vorhergesagt wird, das sich am gleichen Standort wie das Haushaltsgerät (102, 104, 106) befindet, und empfohlener Zeitplaninformationen, die einen empfohlenen Zeitplan eines Reparaturdienstes für das gleichzeitige Beheben des voraussichtlichen Ausfalls und des zusätzlichen Ausfalls anzeigen; und
Anzeigen der zusätzlichen Vorhersageinformationen und der empfohlenen Zeitplaninformationen.

5. Verfahren zum Betreiben eines Benutzerendgeräts (120), umfassend:
Empfangen von Vorhersageinformationen durch das Benutzerendgerät, die einen voraussichtlichen Ausfall eines Haushaltsgeräts (102, 104, 106) anzeigen;
Empfangen eines Zeitplans für die Verfügbarkeit eines Reparaturdienstes zur Behebung des voraussichtlichen Ausfalls des Benutzerendgeräts durch das Benutzerendgerät;
Übertragen, durch das Benutzerendgerät, eines Signals zur Anforderung von Wartungsinformationen, die bei der Verzögerung des voraussichtlichen Ausfalls und Aufrechterhalten eines normalen Betriebs des Haushaltsgeräts (102, 104, 106) verwendet werden, wenn ein Zeitpunkt der Verfügbarkeit des Reparaturdienstes, bestimmt aus dem empfangenen Zeitplan, nach einem voraussichtlichen Ausfallzeitpunkt liegt, der durch die Vorhersageinformationen angegeben wird;
Empfangen der Wartungsinformationen durch das Benutzerendgerät;
Übertragen der Wartungsinformationen durch das Benutzerendgerät an das Haushaltsgerät (102, 104, 106); und
Übertragen eines Anforderungssignals zur Anforderung des Reparaturdienstes, falls der empfangene Zeitplan vor dem voraussichtlichen Ausfallzeitpunkt liegt, der durch die Vorhersageinformation angegeben wird.

6. Verfahren nach Anspruch 1 oder Verfahren nach Anspruch 5, wobei die Wartungsinformationen mindestens eines von einem Betriebsmuster, das einen Betrieb pro Zeit und einen Steuerwert eines Betriebsparameters für jeden Betrieb des Haushaltsgeräts angibt, Informationen über mindestens ein Ersatzteil oder eine Ersatzvorrichtung, das/die zum Ersetzen oder Ergänzen des Haushaltsgeräts (102, 104, 106) verwendet werden soll, um den voraussichtlichen Ausfall des Haushaltsgeräts zu verzögern, und Zeitinformationen umfassen, die eine vorhergesagte Zeitdauer angeben, für die ein normaler Betrieb des Haushaltsgeräts möglich ist, wenn das Betriebsmuster oder das mindestens eine Ersatzteil oder die Ersatzvorrichtung verwendet wird.

7. Verfahren nach Anspruch 5, ferner umfassend:
Empfangen von abgeleiteten Informationen, die einen abgeleiteten Ausfall anzeigen, der in Verbindung mit dem voraussichtlichen Ausfall zusätzlich in dem Haushaltsgerät (102, 104, 106) auftreten soll; und
Anzeigen der abgeleiteten Informationen.

8. Verfahren nach Anspruch 7, wobei der abgeleitete Ausfall basierend auf Betriebsdaten, die von einer Vielzahl von Haushaltsgeräten desselben Typs oder eines ähnlichen Typs wie das Haushaltsgerät (102, 104, 106) gesammelt wurden, und einer Ausfallgeschichte der Vielzahl von Haushaltsgeräten vorhergesagt wird.

9. Verfahren nach Anspruch 5, ferner umfassend:
Empfangen zusätzlicher Vorhersageinformationen, die einen zusätzlichen Ausfall anzeigen, der für ein zusätzliches Haushaltsgerät (102, 104, 106) vorhergesagt wird, das sich am gleichen Standort wie das Haushaltsgerät (102, 104, 106) befindet, und empfohlener Zeitplaninformationen, die einen empfohlenen Zeitplan eines Reparaturdienstes für das gleichzeitige Beheben des voraussichtlichen Ausfalls und des zusätzlichen Ausfalls anzeigen; und
Anzeigen der zusätzlichen Vorhersageinformationen und der empfohlenen Zeitplaninformationen.

10. Haushaltsgerät (102, 104, 106), umfassend:
eine Ausführungseinheit (210);
eine Kommunikationseinheit (230), die konfiguriert ist, um Vorhersageinformationen zu empfangen, die einen voraussichtlichen Ausfall des Haushaltsgeräts anzeigen, um ein Signal zur Anforderung von Wartungsinformationen zur Verwendung bei der Verzögerung des voraussichtlichen Ausfalls und der Aufrechterhaltung eines normalen Betriebs des Haushaltsgeräts zu übertragen, und um die Wartungsinformationen zu empfangen; und
eine Steuerung (220), die so konfiguriert ist, dass sie einen Zeitplan der Verfügbarkeit eines Reparaturdienstes zum Beheben des voraussichtlichen Ausfalls des Haushaltsgeräts empfängt, um das Signal zu erzeugen, wenn ein Zeitpunkt der Verfügbarkeit des Reparaturdienstes, der aus dem empfangenen Zeitplan bestimmt wird, nach einem voraussichtlichen Ausfallzeitpunkt liegt, der durch die Vorhersageinformationen angegeben wird, um die Ausführungseinheit (210) so zu steuern, dass sie basierend auf den Wartungsinformationen arbeitet, und ein Anforderungssignal zum Anfordern des Reparaturdienstes zu übertragen, falls der empfangene Zeitplan vor dem voraussichtlichen Ausfallzeitpunkt liegt, der durch die Vorhersageinformationen angegeben wird.

11. Haushaltsgerät (102, 104, 106) nach Anspruch 10, wobei das Signal Informationen umfasst, die sich auf ein Kriterium beziehen, das mindestens eines von Folgendem angibt: einer Leistung, die in einem Wartungsmodus erbracht werden kann; und einer Dauer, für die der voraussichtliche Ausfall verzögert werden kann.

12. Haushaltsgerät (102, 104, 106) nach Anspruch 10, wobei die Wartungsinformationen mindestens eines von einem Betriebsmuster, das einen Betrieb pro Zeit und einen Steuerwert eines Betriebsparameters für jeden Betrieb des Haushaltsgeräts (102, 104, 106) angibt, Informationen über mindestens ein Ersatzteil oder eine Ersatzvorrichtung, das/die zum Ersetzen oder Ergänzen des Haushaltsgeräts verwendet werden soll, um den voraussichtlichen Ausfall des Haushaltsgeräts zu verzögern, und Zeitinformationen umfassen, die eine vorhergesagte Zeitdauer angeben, für die ein normaler Betrieb des Haushaltsgeräts möglich ist, wenn das Betriebsmuster oder das mindestens eine Ersatzteil oder die Ersatzvorrichtung verwendet wird.

13. Haushaltsgerät (102, 104, 106) nach Anspruch 10, wobei die Steuerung (220) ferner so konfiguriert ist, dass sie die Kommunikationseinheit (230) so steuert, dass sie die Kommunikationseinheit (230) so steuert, dass sie abgeleitete Informationen empfängt, die einen abgeleiteten Ausfall anzeigen, der in Verbindung mit dem voraussichtlichen Ausfall zusätzlich in dem Haushaltsgerät (102, 104, 106) auftreten soll, und dass sie die abgeleiteten Informationen anzeigt.

14. Haushaltsgerät (102, 104, 106) nach Anspruch 10, wobei die Steuerung (220) ferner so konfiguriert ist, dass sie die Kommunikationseinheit (230) steuert, um die Kommunikationseinheit (230) so zu steuern, dass sie zusätzliche Vorhersageinformationen empfängt, die einen zusätzlichen Ausfall anzeigen, der für ein zusätzliches Haushaltsgerät (102, 104, 106) vorhergesagt wird, das sich am gleichen Standort wie das Haushaltsgerät (102, 104, 106) befindet, sowie empfohlene Zeitplaninformationen, die einen empfohlenen Zeitplan eines Reparaturdienstes für die gleichzeitige Behebung des voraussichtlichen Ausfalls und des zusätzlichen Ausfalls anzeigen, und um die zusätzlichen Vorhersageinformationen und die empfohlenen Zeitplaninformationen anzuzeigen.

15. Benutzerendgerät (120), das so konfiguriert ist, dass es eines der Verfahren der Ansprüche 5 bis 9 ausführt.

## Revendications

1. Procédé d'opération d'un appareil (102, 104, 106), comprenant :
recevoir, par l'appareil, des informations de prédiction indiquant une défaillance prévue de l'appareil (102, 104, 106) ;
recevoir, par l'appareil, un calendrier de disponibilité d'un service de réparation pour réparer la défaillance prévue de l'appareil ;
transmettre, par l'appareil, un signal de requête d'informations de maintenance à utiliser pour retarder la défaillance prévue et maintenir une opération normale de l'appareil (102, 104, 106) si un point temporel de disponibilité du service de réparation, déterminé à partir du calendrier reçu, est postérieur à un point temporel de défaillance prévue indiqué par les informations de prédiction ;
recevoir, par l'appareil, les informations de maintenance ;
fonctionner, par l'appareil, basée sur les informations de maintenance pour retarder la défaillance prévue ; et
transmettre, par l'appareil, un signal de demande pour demander le service de réparation si le point temporel de disponibilité du service de réparation, déterminé à partir du calendrier reçu, est antérieur au point temporel de défaillance prévue indiqué par les informations de prédiction.

2. Procédé de la revendication 1, comprenant en outre :
recevoir un critère comprenant au moins l'une de ce qui suit : la performance qui peut être fournie dans un mode de maintenance ; et la durée pendant laquelle la défaillance prévue peut être retardée avant la transmission du signal,
dans lequel le signal comprend des informations relatives au critère.

3. Procédé de la revendication 1, comprenant en outre :
recevoir des informations dérivées indiquant une défaillance dérivée qui est censée se produire en plus dans l'appareil (102, 104, 106) en rapport avec la défaillance prévue ; et
afficher les informations dérivées.

4. Procédé de la revendication 1, comprenant en outre :
recevoir des informations de prédiction supplémentaires indiquant une défaillance supplémentaire qui devrait se produire dans un appareil supplémentaire (102, 104, 106) situé sur le même lieu que l'appareil (102, 104, 106) et des informations de calendrier recommandé indiquant un calendrier recommandé d'un service de réparation pour réparer simultanément la défaillance prédite et la défaillance supplémentaire ; et
afficher les informations de prédiction supplémentaires et les informations de calendrier recommandé.

5. Procédé d'opération d'un terminal d'utilisateur (120), comprenant :
recevoir, par le terminal d'utilisateur, des informations de prédiction indiquant une défaillance prévue d'un appareil (102, 104, 106) ;
recevoir, par le terminal d'utilisateur, un calendrier de disponibilité d'un service de réparation pour réparer la défaillance prévue du terminal d'utilisateur ;
transmettre, par le terminal d'utilisateur, un signal de requête d'informations de maintenance utilisées pour retarder la défaillance prévue et maintenir une opération normale de l'appareil (102, 104, 106) si un point temporel de disponibilité du service de réparation, déterminé à partir du calendrier reçu, est postérieur à un point temporel de défaillance prévue indiqué par les informations de prédiction ;
recevoir, par le terminal d'utilisateur, les informations de maintenance ;
transmettre, par le terminal d'utilisateur, les informations de maintenance à l'appareil (102, 104, 106) ; et
transmettre un signal de demande pour demander le service de réparation si le calendrier reçu est antérieur au point temporel de défaillance prévue indiqué par les informations de prédiction.

6. Procédé de la revendication 1 ou procédé de la revendication 5, dans lequel les informations de maintenance comprennent au moins un d'un motif d'opération indiquant une opération par temps et une valeur de commande d'un paramètre d'opération pour chaque opération de l'appareil, des informations sur au moins une pièce de rechange ou un dispositif de remplacement à utiliser pour remplacer ou compléter l'appareil (102, 104, 106) afin de retarder la défaillance prévue de l'appareil, et des informations temporelles indiquant une durée prévue pour laquelle un fonctionnement normal de l'appareil est possible si le motif d'opération ou au moins une pièce de rechange ou un dispositif de remplacement est utilisé.

7. Procédé de la revendication 5, comprenant en outre :
recevoir des informations dérivées indiquant une défaillance dérivée qui est censée se produire en plus dans l'appareil (102, 104, 106) en rapport avec la défaillance prévue ; et
afficher les informations dérivées.

8. Procédé de la revendication 7, dans lequel la défaillance dérivée est prédite en se basant sur des données de fonctionnement recueillies auprès d'une pluralité d'appareils du même type que l'appareil (102, 104, 106) ou de types similaires, et sur un historique de défaillances de la pluralité d'appareils.

9. Procédé de la revendication 5, comprenant en outre :
recevoir des informations de prédiction supplémentaires indiquant une défaillance supplémentaire qui devrait se produire dans un appareil supplémentaire (102, 104, 106) situé sur le même lieu que l'appareil (102, 104, 106) et des informations de calendrier recommandé indiquant un calendrier recommandé d'un service de réparation pour réparer simultanément la défaillance prédite et la défaillance supplémentaire ; et
afficher les informations de prédiction supplémentaires et les informations de calendrier recommandé.

10. Appareil (102, 104, 106) comprenant :
une unité d'exécution (210) ;
une unité de communication (230) configurée pour recevoir des informations de prédiction indiquant une défaillance prévue de l'appareil, pour transmettre un signal de demande d'informations de maintenance à utiliser pour retarder la défaillance prévue et maintenir une opération normale de l'appareil, et pour recevoir les informations de maintenance ; et
une commande (220) configurée pour recevoir un calendrier de disponibilité d'un service de réparation pour réparer la défaillance prévue de l'appareil, pour générer le signal si un point temporel de disponibilité du service de réparation, déterminé à partir du calendrier reçu, est postérieur à un point temporel de défaillance prévu indiqué par les informations de prédiction, pour commander l'unité d'exécution (210) pour fonctionner sur la base des informations de maintenance, et pour transmettre un signal de demande pour demander le service de réparation si le calendrier reçu est antérieur au point temporel de défaillance prévu indiqué par les informations de prédiction.

11. Appareil (102, 104, 106) de la revendication 10, dans lequel le signal comprend des informations relatives à un critère indiquant au moins l'une de ce qui suit : une performance pouvant être fournie dans un mode de maintenance ; et une durée pendant laquelle la défaillance prévue peut être retardée.

12. Appareil (102, 104, 106) de la revendication 10, dans lequel les informations de maintenance comprennent au moins un d'un motif d'opération indiquant une opération par temps et une valeur de commande d'un paramètre d'opération pour chaque opération de l'appareil (102, 104, 106), des informations sur au moins une pièce de rechange ou un dispositif de remplacement à utiliser pour remplacer ou compléter l'appareil afin de retarder la défaillance prévue de l'appareil, et des informations temporelles indiquant une durée prévue pour laquelle un fonctionnement normal de l'appareil est possible si le motif d'opération ou au moins une pièce de rechange ou un dispositif de remplacement est utilisé.

13. Appareil (102, 104, 106) de la revendication 10, dans lequel la commande (220) est en outre configurée pour commander l'unité de communication (230) afin de commander l'unité de communication (230) pour recevoir des informations dérivées indiquant une défaillance dérivée qui est prédite pour se produire en plus dans l'appareil (102, 104, 106) en relation avec la défaillance prévue, et pour afficher les informations dérivées.

14. Appareil (102, 104, 106) de la revendication 10, dans lequel la commande (220) est en outre configurée pour commander l'unité de communication (230) afin de commander l'unité de communication (230) pour recevoir des informations de prédiction supplémentaires indiquant une défaillance supplémentaire qui est prévue pour se produire dans un appareil supplémentaire (102, 104, 106) qui est situé sur un même lieu que l'appareil (102, 104, 106) et des informations de calendrier recommandé indiquant un calendrier recommandé d'un service de réparation pour réparer la défaillance prévue et la défaillance supplémentaire simultanément, et pour afficher les informations de prédiction supplémentaires et les informations de calendrier recommandé.

15. Terminal d'utilisateur (120) configuré pour exécuter l'un des procédés des revendications 5 à 9.
